(19) 

**Europäisches Patentamt**
**European Patent Office**
**Office européen des brevets**

(11) **EP 4 024 718 A1**

(12) 
# EUROPEAN PATENT APPLICATION
published in accordance with Art. 153(4) EPC

(43) Date of publication:
06.07.2022 Bulletin 2022/27

(21) Application number: 20865208.1

(22) Date of filing: 21.08.2020

(51) International Patent Classification (IPC):
*H04B 1/525* (2015.01)

(52) Cooperative Patent Classification (CPC):
H04B 1/04; H04B 1/525

(86) International application number:
PCT/CN2020/110385

(87) International publication number:
WO 2021/052102 (25.03.2021 Gazette 2021/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.09.2019 CN 201910893571

(71) Applicant: Huawei Technologies Co., Ltd.
Longgang District
Shenzhen,
Guangdong 518129 (CN)

(72) Inventors:
• LIU, Daqing
Shenzhen, Guangdong 518129 (CN)
• WANG, Bin
Shenzhen, Guangdong 518129 (CN)
• LIU, Xiaocheng
Shenzhen, Guangdong 518129 (CN)
• WANG, Jun
Shenzhen, Guangdong 518129 (CN)
• LI, Rong
Shenzhen, Guangdong 518129 (CN)
• QIAO, Yunfei
Shenzhen, Guangdong 518129 (CN)
• DU, Yinggang
Shenzhen, Guangdong 518129 (CN)
• YU, Rongdao
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION DEVICE, AND RADIO-FREQUENCY INTERFERENCE ELIMINATION METHOD AND APPARATUS**

(57) Embodiments of this application disclose a communications device, a radio frequency interference cancellation method, and an apparatus. The communications device includes a power splitter circuit, a cancellation circuit, a transceiver antenna array, and a combination circuit. Before a radio frequency signal is transmitted through a transmit antenna, the power splitter circuit divides the radio frequency signal into two signals: a first transmit signal and a second transmit signal. The first transmit signal is sent through the transmit antenna in the transceiver antenna array, and interferes with each receive antenna in the transceiver antenna array. The second transmit signal enters the cancellation circuit, and the cancellation circuit performs frequency conversion processing on the second transmit signal, to obtain a first cancellation signal set. That is, the cancellation circuit may generate, by using the second transmit signal, a cancellation signal used to cancel out an interference signal of each receive antenna, to implement a function of generating a plurality of cancellation signals by using one transmit signal. The combination circuit cancels out an interference signal of a corresponding receive antenna by using each first cancellation signal.

EP 4 024 718 A1

201

202

203

| Power splitter circuit | | Cancellation circuit | | Combination circuit |

204

Transceiver antenna array

FIG. 2

**Description**

This application claims priority to Chinese Patent Application No. 201910893571.5, filed with the China National Intellectual Property Administration on September 20, 2019 and entitled "COMMUNICATIONS DEVICE, RADIO FREQUENCY INTERFERENCE CANCELLATION METHOD, AND APPARATUS", which is incorporated herein by reference in its entirety.

**TECHNICAL FIELD**

This application relates to the field of communications technologies, and in particular, to a communications device, a radio frequency interference cancellation method, and an apparatus.

**BACKGROUND**

Full-duplex communication is always a research hotspot in the communications field. However, because a transmit link and a receive link work on a same time-frequency resource, the transmit link causes strong interference to the receive link. The interference caused by the transmit link to the receive link may include coupling interference between transmit and receive radio channels , near-field coupling interference between a transmit antenna and a receive antenna, echo interference caused by a reflector, and the like.

The coupling interference between the radio frequency circuits has a minimum delay, where the delay is usually several nanoseconds. The coupling interference may be reduced by adopting a shielding measure and adding wave-absorbing materials on a circuit board. When an antenna is far from the reflector, the echo interference caused by reflection usually has low intensity and can be canceled out in a digital domain. However, a transmit antenna and a receive antenna are usually close to each other, or even share one antenna. In this case, strong near-field coupling interference is caused, and normal receiving of a received signal is seriously affected. Therefore, reducing the near-field coupling interference between the transmit antenna and the receive antenna is a primary problem to be resolved in implementing full-duplex communication.

**SUMMARY**

In view of this, embodiments of this application provide a communications device, a radio frequency interference cancellation method, and an apparatus, to cancel out near-field coupling interference and improve quality of a received signal.

To resolve the foregoing problem, the embodiments of the application provide the following technical solutions:

According to a first aspect, a communications device is provided, where the device includes a power splitter circuit, a transceiver antenna array, a cancellation circuit, and a combination circuit. The power splitter circuit is configured to divide a radio frequency signal into a first transmit signal and a second transmit signal, where the first transmit signal is sent through a corresponding transmit antenna in the transceiver antenna array, and interferes with each receive antenna in the transceiver antenna array. The cancellation circuit is configured to perform frequency conversion processing on the second transmit signal, to obtain a first cancellation signal set, where the first cancellation signal set includes $n$ first cancellation signals, and $n$ is a quantity of receive antennas in the transceiver antenna array. The combination circuit is configured to cancel out an interference signal of an $i^{th}$ receive antenna in the transceiver antenna array by using an $i^{th}$ first cancellation signal, to obtain an actual received signal of the $i^{th}$ receive antenna, where the interference signal of the $i^{th}$ receive antenna is equal in amplitude and opposite in phase to the $i^{th}$ first cancellation signal, and $i$ is equal to 1-n. That is, the cancellation circuit may generate, by using the second transmit signal, a cancellation signal used to cancel out an interference signal of each receive antenna, to implement a function of generating a plurality of cancellation signals by using one transmit signal. The combination circuit cancels out an interference signal of a corresponding receive antenna by using each first cancellation signal, to improve quality of a received signal of each receive antenna.

With reference to the first aspect, in a first possible implementation of the first aspect, the cancellation circuit includes an up-conversion circuit, a cancellation antenna array, and a down-conversion circuit. The up-conversion circuit is configured to perform up-conversion on the second transmit signal by using a local oscillation signal, to obtain a third transmit signal. The cancellation antenna array is configured to obtain a second cancellation signal set based on the third transmit signal, where the second cancellation signal set includes $n$ second cancellation signals. The down-conversion circuit is configured to perform down-conversion on the second cancellation signals in the second cancellation signal set by using the local oscillation signal, to obtain the first cancellation signal set. In this implementation, an up-conversion operation is performed on the second transmit signal to obtain the third transmit signal. This increases a transmit frequency of the third transmit signal, reduces a wavelength of the third transmit signal, and reduces a size of a cancellation antenna in the cancellation antenna array.

With reference to the first possible implementation of the first aspect, in a second possible implementation of the first aspect, a frequency of the local oscillation signal is determined based on an antenna size reduction multiplier and a frequency of the second transmit signal, where the antenna size reduction multiplier is determined by dividing an antenna size of the transceiver antenna array by an antenna size of the cancellation antenna array. In this implementation, after the antenna size reduction multiplier and the frequency of the second transmit signal are determined, the local oscillation signal may be determined, and then the frequency of the second transmit signal may be increased to a specified high frequency, for transmission.

With reference to the first possible implementation of the first aspect, in a third possible implementation of the first aspect, the cancellation antenna array is specifically configured to: multiply a scattering parameter matrix of the cancellation antenna array by the third transmit signal, to obtain the second cancellation signal set, where the scattering parameter matrix of the cancellation antenna array and a scattering parameter matrix of the transceiver antenna array are the same in their respective corresponding operating frequencies or have a multiple relationship in their respective corresponding operating frequencies; and multiply the scattering parameter matrix of the transceiver antenna array by the first transmit signal, to generate an interference signal set, where the interference signal set includes an interference signal caused by the first transmit signal to each receive antenna. In this implementation, a physical structure of the cancellation antenna of the cancellation antenna array is the same as that of a transceiver antenna in the transceiver antenna array, and operating statuses of the cancellation antenna and the transceiver antenna are the same on their respective operating frequencies. Therefore, the scattering parameter matrix of the cancellation antenna array is equal to or has a multiple relationship with the scattering parameter matrix of the transceiver antenna array. Further, the cancellation antenna array may reconstruct an interference signal generated by the transceiver antenna, and then phase shift is performed on the interference signal generated by the cancellation antenna array, so that an amplitude of the cancellation signal is equal to that of the interference signal, and a phase of the cancellation signal differs from that of the interference signal by 180 degrees, to cancel out radio frequency interference.

With reference to the first aspect, in a fourth possible implementation of the first aspect, the device further includes: a gain amplification circuit. The gain amplification circuit is configured to: when the amplitude of the $i^{th}$ first cancellation signal is not equal to the amplitude of the interference signal of the $i^{th}$ receive antenna, adjust the amplitude of the $i^{th}$ first cancellation signal to be equal to the amplitude of the interference signal of the $i^{th}$ receive antenna. In this implementation, to ensure that an amplitude of a first cancellation signal is equal to an amplitude of a corresponding interference signal in a received signal to implement complete cancellation, the amplitude of the first cancellation signal may be adjusted, so that the amplitude of the first cancellation signal is equal to the amplitude of the interference signal.

With reference to the first possible implementation of the first aspect, in a fifth possible implementation of the first aspect, the device further includes a local oscillator. The local oscillator is configured to provide the local oscillation signal for the up-conversion circuit. In this implementation, the local oscillator may be used to provide the local oscillation signal for the up-conversion circuit, so as to perform up-conversion processing on the second transmit signal.

According to a second aspect, a radio frequency interference cancellation method is provided, where the method is applied to the device according to the first aspect, and the method includes:

receiving a radio frequency signal, and dividing the radio frequency signal into a first transmit signal and a second transmit signal, where the first transmit signal is sent through a corresponding transmit antenna in a transceiver antenna array, and interferes with each receive antenna in the transceiver antenna array;
performing frequency conversion processing on the second transmit signal, to obtain a first cancellation signal set, where the first cancellation signal set includes n first cancellation signals, and n is a quantity of receive antennas in the transceiver antenna array; and
canceling out an interference signal of an $i^{th}$ receive antenna in the transceiver antenna array by using an $i^{th}$ first cancellation signal, to obtain an actual received signal of the $i^{th}$ receive antenna, where the interference signal of the $i^{th}$ receive antenna is equal in amplitude and opposite in phase to the $i^{th}$ first cancellation signal, and i is equal to 1-n.

With reference to the second aspect, in a first possible implementation of the second aspect, the performing frequency conversion processing on the second transmit signal, to obtain a first cancellation signal includes:

performing up-conversion on the second transmit signal by using a local oscillation signal, to obtain a third transmit signal;
obtaining a second cancellation signal set based on the third transmit signal, where the second cancellation signal set includes n second cancellation signals; and
performing down-conversion on the second cancellation signals in the second cancellation signal set by using the local oscillation signal, to obtain the first cancellation signal set.

With reference to the first possible implementation of the second aspect, in a second possible implementation of the second aspect, the cancellation antenna array obtains the second cancellation signal set based on the third transmit signal. A frequency of the local oscillation signal is determined based on an antenna size reduction multiplier and a frequency of the second transmit signal, where the antenna size reduction multiplier is determined by dividing a size of the transceiver antenna array by a size of the cancellation antenna array.

With reference to the first possible implementation of the second aspect, in a third possible implementation of the second aspect, the obtaining a second cancellation signal set based on the third transmit signal includes:

multiplying a scattering parameter matrix of the cancellation antenna array by the third transmit signal, to obtain the second cancellation signal set, where the scattering parameter matrix of the cancellation antenna array and a scattering parameter matrix of the transceiver antenna array are the same in their respective corresponding operating frequencies or have the multiple relationship in their respective corresponding operating frequencies; and multiplying the scattering parameter matrix of the transceiver antenna array by the first transmit signal, to generate an interference signal set, where the interference signal set includes n interference signals.

With reference to the second aspect, in a fourth possible implementation of the second aspect, before the canceling out an interference signal of an $i^{th}$ receive antenna in the transceiver antenna array by using an $i^{th}$ first cancellation signal, when the amplitude of the $i^{th}$ first cancellation signal is not equal to the amplitude of the interference signal of the $i^{th}$ receive antenna, the method further includes:

adjusting the amplitude of the $i^{th}$ first cancellation signal, so that an adjusted amplitude of the $i^{th}$ first cancellation signal is equal to the amplitude of the interference signal of the $i^{th}$ receive antenna.

According to a third aspect, a radio frequency interference cancellation apparatus is provided, where the apparatus is applied to the device according to the first aspect, and the apparatus includes:

a receiving unit, configured to receive a radio frequency signal, and divide the radio frequency signal into a first transmit signal and a second transmit signal, where the first transmit signal is sent through a corresponding transmit antenna in a transceiver antenna array, and interferes with each receive antenna in the transceiver antenna array; a processing unit, configured to perform frequency conversion processing on the second transmit signal, to obtain a first cancellation signal set, where the first cancellation signal set includes n first cancellation signals, and n is a quantity of receive antennas in the transceiver antenna array; and a cancellation unit, configured to cancel out an interference signal of an $i^{th}$ receive antenna in the transceiver antenna array by using an $i^{th}$ first cancellation signal, to obtain an actual received signal of the $i^{th}$ receive antenna, where the interference signal of the $i^{th}$ receive antenna is equal in amplitude and opposite in phase to the $i^{th}$ first cancellation signal, and i is equal to 1-n.

With reference to the third aspect, in a first possible implementation of the third aspect, the processing unit includes:

an up-conversion subunit, configured to perform up-conversion on the second transmit signal by using a local oscillation signal, to obtain a third transmit signal; an obtaining subunit, configured to obtain a second cancellation signal set based on the third transmit signal, where the second cancellation signal set includes n second cancellation signals; and a down-conversion subunit, configured to perform down-conversion on the second cancellation signals in the second cancellation signal set by using the local oscillation signal, to obtain the first cancellation signal set.

With reference to the first possible implementation of the third aspect, in a second possible implementation of the third aspect, the obtaining subunit is specifically configured to obtain the second cancellation signal set based on the third transmit signal by using a cancellation antenna array. A frequency of the local oscillation signal is determined based on an antenna size reduction multiplier and a frequency of the second transmit signal, where the antenna size reduction multiplier is determined by dividing a size of the transceiver antenna array by a size of the cancellation antenna array.

With reference to the second possible implementation of the third aspect, in a third possible implementation of the third aspect, the obtaining subunit is specifically configured to: multiply a scattering parameter matrix of the cancellation antenna array by the third transmit signal, to obtain the second cancellation signal set, where the scattering parameter matrix of the cancellation antenna array and a scattering parameter matrix of the transceiver antenna array are the same in their respective corresponding operating frequencies or have a multiple relationship in their respective corresponding operating frequencies; and multiply the scattering parameter matrix of the transceiver antenna array by the first transmit signal, to generate an interference signal set, where the interference signal set includes n interference signals.

With reference to the third aspect, in a fourth possible implementation of the third aspect, the apparatus further includes:

an adjusting unit, configured to: before the cancellation unit is executed, adjust the amplitude of the $i^{th}$ first cancellation signal, so that an adjusted amplitude of the $i^{th}$ first cancellation signal is equal to the amplitude of the interference signal of the $i^{th}$ receive antenna.

According to a fourth aspect, a computer-readable storage medium is provided, where the computer-readable storage medium stores a program, and when the program is read and executed by one or more processors, the radio frequency interference cancellation method according to the second aspect may be implemented.

According to a fifth aspect, a communications device is provided, including a processor and a memory.

The memory is configured to store computer-readable instructions or a computer program, and the processor is configured to read the computer-readable instructions to implement the radio frequency interference cancellation method according to the second aspect.

It can be learned that the embodiments of this application have the following beneficial effects.

The communications device provided in the embodiments of this application includes the power splitter circuit, the cancellation circuit, the transceiver antenna array, and the combination circuit. Before the radio frequency signal is transmitted through the transmit antenna in the transceiver antenna array, the power splitter circuit may divide the radio frequency signal into two signals: the first transmit signal and the second transmit signal. The first transmit signal is sent through the transmit antenna in the transceiver antenna array, and interferes with each receive antenna in the transceiver antenna array. The second transmit signal enters the cancellation circuit, and the cancellation circuit performs frequency conversion processing on the second transmit signal, to obtain the first cancellation signal set, where the first cancellation signal set includes n first cancellation signals. That is, the cancellation circuit may generate, by using the second transmit signal, a cancellation signal used to cancel out an interference signal of each receive antenna, to implement a function of generating a plurality of cancellation signals by using one transmit signal. The combination circuit cancels out an interference signal of a corresponding receive antenna by using each first cancellation signal, to improve quality of a received signal of each receive antenna.

In addition, the communications device may obtain a plurality of first cancellation signals for a radio frequency signal of one transmit antenna, and a cancellation circuit does not need to be disposed for interference caused by each transmit antenna to each receive antenna. This reduces hardware complexity and implements interference cancellation of a multi-antenna array.

## BRIEF DESCRIPTION OF DRAWINGS

To describe the technical solutions in the specific implementations of this application or in the prior art more clearly, the following briefly describes the accompanying drawings for describing the specific implementations or the prior art. It is clear that the accompanying drawings in the following descriptions show a part of implementations of this application, and a person of ordinary skill in the art may derive other drawings from these accompanying drawings without creative efforts.

FIG. 1 is a diagram of a conventional radio frequency interference cancellation principle according to an embodiment of this application;

FIG. 2 is a diagram of a structure of a communications device according to an embodiment of this application;

FIG. 3 is a diagram of a structure of another communications device according to an embodiment of this application;

FIG. 4 is a schematic diagram of a communications device according to an embodiment of this application;

FIG. 5a is a schematic diagram of a transceiver antenna according to an embodiment of this application;

FIG. 5b is a schematic diagram of a cancellation antenna according to an embodiment of this application;

FIG. 6a is a simulation diagram of an amplitude of a transceiver antenna according to an embodiment of this application;

FIG. 6b is a simulation diagram of an amplitude of a cancellation antenna according to an embodiment of this application;

FIG. 6c is a simulation diagram of a phrase of a transceiver antenna according to an embodiment of this application;

FIG. 6d is a simulation diagram of a phrase of a cancellation antenna according to an embodiment of this application;

FIG. 7 is a flowchart of a radio frequency interference cancellation method according to an embodiment of this application;

FIG. 8 is a diagram of an example of an application scenario according to an embodiment of this application;

FIG. 9 is a diagram of an example of another application scenario according to an embodiment of this application;

FIG. 10 is a diagram of an example of still another application scenario according to an embodiment of this application;

FIG. 11 is a schematic diagram of a calibrating cancellation signal according to an embodiment of this application;

FIG. 12 is a diagram of a structure of a radio frequency interference cancellation apparatus according to an embodiment of this application; and

FIG. 13 is a diagram of a structure of still another communications device according to an embodiment of this application.

## DESCRIPTION OF EMBODIMENTS

To help a person skilled in the art understand the technical solutions in the present invention better, the following clearly and completely describes the technical solutions in the embodiments of the present invention with reference to the accompanying drawings in the embodiments of the present invention. It is clear that, the described embodiments are merely a part rather than all of the embodiments of the present invention. All the embodiments based on the present invention shall fall within the protection scope of the present invention.

For ease of understanding specific implementation of this application, the following first describes the background of this application.

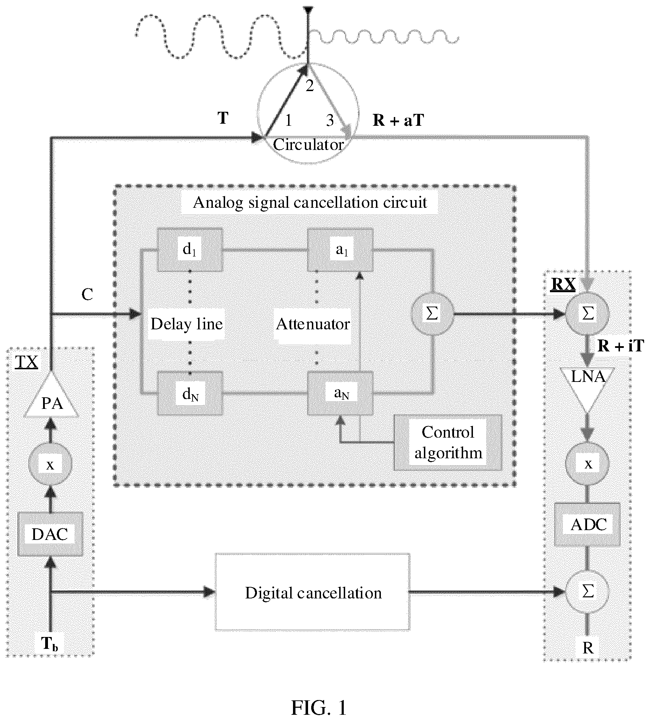

In a multi-antenna array, interference exists between any two antennas. To cancel out interference caused by a transmit link to a receive link in full-duplex communication, a cancellation link needs to be constructed for interference caused by each transmit link to each receive link, so as to cancel out radio frequency interference. In comparison with a single antenna, canceling out radio frequency interference of the multi-antenna array is more complex. In a radio frequency interference cancellation principle diagram shown in FIG. 1, one transmit antenna TX and one receive antenna are used as an example for description. Apart of a transmit signal (the signal is used to cancel out interference, that is, a cancellation signal) is coupled at a transmit end (after a PA). The signal passes through an interference cancellation circuit. The circuit includes a plurality of delay lines. Each delay line has an attenuator with a fixed phase shift and an adjustable amplitude, and an attenuation value of each attenuator is adjusted, so that an amplitude of the cancellation signal is equal to that of an interference signal, and a phase of the cancellation signal differs from that of the interference signal by 180 degrees. Two signals are combined at a receive end to cancel out the interference signal. In a case of multiple antennas, because any transmit antenna in the multi-antenna array causes interference to all receive antennas, a cancellation circuit needs to be disposed between each transmit antenna and each receive antenna. In comparison with a single antenna, canceling out interference of the multiple antennas is more complex.

However, with the development of a multiple-input multiple-output (multiple-Input multiple-Output, MIMO) technology, a future full-duplex communications technology is to be combined with a MIMO antenna array, to improve communication quality. When radio frequency interference cancellation is performed on the MIMO antenna array by using the cancellation principle shown in FIG. 1, complexity is greatly increased. In this case, a cancellation device occupies a large amount of space, and radio frequency interference between multiple antennas cannot be completely canceled out. This affects a cancellation effect.

Based on this, an embodiment of this application provides a communications device, where the device includes a power splitter circuit, a transceiver antenna array, a cancellation circuit, and a combination circuit. Before a radio frequency signal is transmitted through a transmit antenna of a transceiver antenna module, the power splitter circuit divides the radio frequency signal into two signals: a first transmit signal and a second transmit signal. The first transmit signal is sent through the transmit antenna in the transceiver antenna array, and interferes with a received signal of each receive antenna in the transceiver antenna array. For the other signal obtained through division, that is, for the second transmit signal, the cancellation circuit performs frequency conversion processing on the second transmit signal, to obtain a first cancellation signal set, where the first cancellation signal set includes n first cancellation signals. That is, for a radio frequency signal of a transmit antenna, a plurality of first cancellation signals may be obtained by using the cancellation circuit, so that the combination circuit cancels out interference signals of a plurality of receive antennas in the transceiver antenna array by using the plurality of first cancellation signals, to obtain an actual received signal of each receive antenna. It can be learned that radio frequency interference caused by the transmit antenna to the receive antenna can be canceled out, and a cancellation circuit does not need to be disposed for interference caused by each transmit antenna to each receive antenna. This reduces hardware complexity and implements interference cancellation of the multi-antenna array.

With reference to the accompanying drawings, the following describes in detail various non-limiting specific implementations of a radio frequency interference cancellation method and a communications device in the embodiments of this application by using embodiments.

Device embodiment

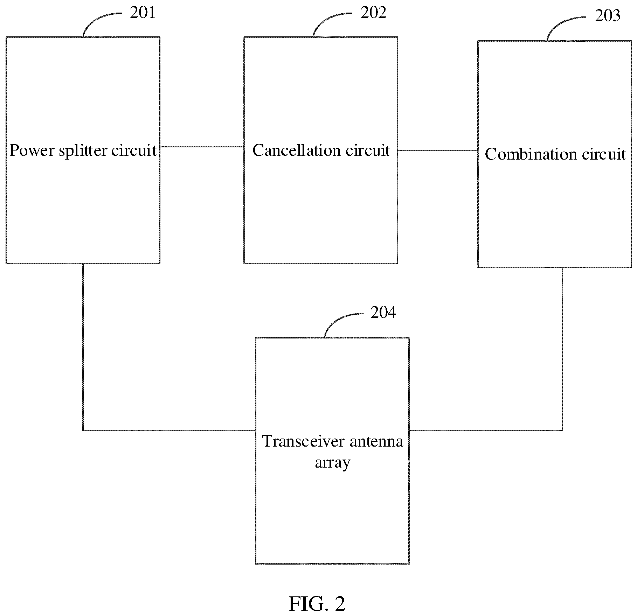

FIG. 2 is a schematic diagram of a structure of a communications device according to an embodiment of this application. As shown in FIG. 2, the device may include a power splitter circuit 201, a cancellation circuit 202, a combination circuit 203, and a transceiver antenna array 204.

The power splitter circuit 201 is configured to divide a radio frequency signal into a first transmit signal and a second transmit signal. The first transmit signal is sent through a corresponding transmit antenna in the transceiver antenna array 204, and interferes with each receive antenna in the transceiver antenna array 204.

In this embodiment, for a radio frequency signal corresponding to any transmit antenna in the transceiver antenna array, the power splitter circuit may divide the radio frequency signal into two signals. One signal is transmitted through the transmit antenna in the transceiver antenna array, and the other signal enters the cancellation circuit. For example, when the transceiver antenna array includes four transmit antennas, the power splitter circuit may perform splitting processing on a radio frequency signal corresponding to each of the four transmit antennas, and divide each radio frequency signal into a first transmit signal and a second transmit signal, so that a plurality of first transmit signals and a plurality of second transmit signals can be obtained.

During specific implementation, the power splitter circuit 201 may include a power splitter or a coupler. When the power splitter circuit 201 includes the power splitter, the radio frequency signal may be equally divided into the first transmit signal and the second transmit signal based on power of the radio frequency signal. When the power splitter circuit 201 includes the coupler, the radio frequency signal may be divided based on a preset proportion. In actual application, a specific function of the power splitter circuit may alternatively be implemented by another component. This is not limited in this embodiment.

The cancellation circuit 202 is configured to perform frequency conversion processing on the second transmit signal, to obtain a first cancellation signal set, where the first cancellation signal set includes n first cancellation signals.

In this embodiment, after receiving the second transmit signal, the cancellation circuit performs frequency conversion processing on the second transmit signal, to obtain a cancellation signal set, where the cancellation signal set may include n first cancellation signals. That is, the cancellation circuit may generate a plurality of first cancellation signals based on one second transmit signal, to cancel out interference signals caused by one transmit antenna to all receive antennas.

The combination circuit 203 is configured to cancel out an interference signal of an $i^{th}$ receive antenna in the transceiver antenna array by using an $i^{th}$ first cancellation signal in the cancellation signal set, to obtain an actual received signal of the $i^{th}$ receive antenna. The interference signal of the $i^{th}$ receive antenna is equal in amplitude and opposite in phase to the $i^{th}$ first cancellation signal, and i is equal to 1-n.

In this embodiment, the combination circuit cancels out an interference signal of a corresponding receive antenna by using each first cancellation signal, so as to cancel out radio frequency interference and obtain an actual received signal of the receive antenna. The first cancellation signal is equal in amplitude and opposite in phase to the interference signal of the corresponding receive antenna, so as to ensure that the first cancellation signal can completely cancel out the interference signal.

It may be understood that, to ensure that the phase of the first cancellation signal is opposite to that of the interference signal, the communications device needs to have a phase shift function, and through phase shift, the phase of the first cancellation signal differs from that of the interference signal by 180° or an integer multiple of 180°, that is, the phase of the first cancellation signal is opposite to that of the interference signal. During specific implementation, the phase shift function may be implemented by any circuit in the communications device, or may be implemented by a separate phase shift circuit. This is not limited herein in this embodiment. When the separate phase shift circuit is used to implement the function, the phase shift circuit may be disposed between the power splitter circuit and the cancellation circuit, or may be disposed between the cancellation circuit and the combination circuit. A position of the phase shift circuit is not limited herein in this embodiment.

It can be learned from the foregoing description that the communications device provided in this embodiment of this application includes the power splitter circuit, the cancellation circuit, the transceiver antenna array, and the combination circuit. Before the radio frequency signal is transmitted through the transmit antenna in the transceiver antenna array, the power splitter circuit may divide the radio frequency signal into two signals: the first transmit signal and the second transmit signal. The first transmit signal is sent through the transmit antenna in the transceiver antenna array, and interferes with each receive antenna in the transceiver antenna array. The second transmit signal enters the cancellation circuit, and the cancellation circuit performs frequency conversion processing on the second transmit signal, to obtain the first cancellation signal set, where the first cancellation signal set includes n first cancellation signals. That is, the cancellation circuit may generate, by using the second transmit signal, a cancellation signal used to cancel out an interference signal of each receive antenna, to implement a function of generating a plurality of cancellation signals by using one transmit signal. The combination circuit cancels out an interference signal of a corresponding receive antenna by using each first cancellation signal, to improve quality of a received signal of each receive antenna.

In addition, the communications device may obtain a plurality of first cancellation signals for a radio frequency signal of one transmit antenna, and a cancellation circuit does not need to be disposed for interference caused by each transmit antenna to each receive antenna. This reduces hardware complexity from $N^2$ to N (N is a quantity of transceiver antennas) and implements interference cancellation of a multi-antenna array.

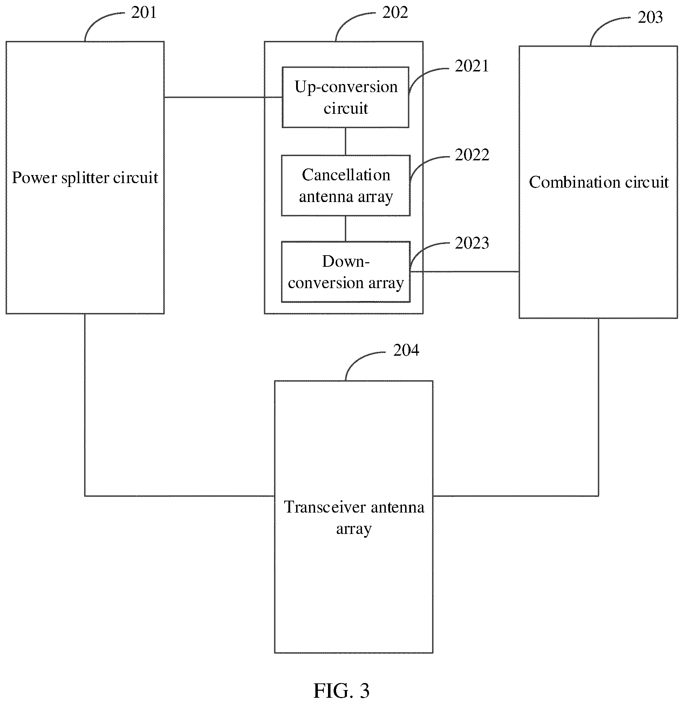

In a possible implementation, the cancellation circuit 202 may include an up-conversion circuit 2021, a cancellation antenna array 2022, and a down-conversion circuit 2023, as shown in FIG. 3.

The up-conversion circuit 2021 is configured to perform up-conversion on the second transmit signal by using a local oscillation signal, to obtain a third transmit signal. That is, the up-conversion circuit performs an up-conversion operation on the second transmit signal, to shift a frequency of the second transmit signal to a high frequency, so as to obtain the third transmit signal. In other words, information included in the third transmit signal is the same as information included in the second transmit signal, and only a frequency of the third transmit signal is greater than that of the second transmit signal. During specific implementation, the local oscillation signal is multiplied by the second transmit signal, to obtain the third transmit signal. It should be noted that for each second transmit signal, the up-conversion circuit may perform up-conversion processing on all second transmit signals by using a same local oscillation signal.

It may be understood that an antenna size is determined based on a wavelength of a signal. A longer wavelength indicates a larger corresponding antenna size, and the wavelength of the signal is inversely proportional to a frequency of the signal. To reduce a size of the cancellation antenna array, up-conversion processing is performed on the second transmit signal, to increase the frequency of the third transmit signal. This reduces a wavelength of the third transmit signal, and reduces a size of a cancellation antenna in the cancellation antenna array. Therefore, after a size of a transceiver antenna in the transceiver antenna array and the size of the cancellation antenna in the cancellation antenna array are both determined, a frequency of the local oscillation signal may be determined. Specifically, the frequency of the local oscillation signal is determined based on an antenna size reduction multiplier and the frequency of the second transmit signal, and the antenna size reduction multiplier is determined by dividing an antenna size in the transceiver antenna array by an antenna size in the cancellation antenna array. For example, the size of the cancellation antenna is reduced by X times compared with that of the transceiver antenna, and X is a frequency amplification multiple. $X = (f + f_0)/f$, where f represents the frequency of the second transmit signal, $f_0$ represents the frequency of the local oscillation signal, and $(f + f_0)$ represents the frequency of the third transmit signal. When X is determined, $f_0 = X * f - f$.

The cancellation antenna array 2022 is configured to obtain a second cancellation signal set based on the third transmit signal, where the second cancellation signal set includes n second cancellation signals.

In this embodiment, the cancellation antenna array may obtain the second cancellation signal set based on a high-frequency signal, that is, the third transmit signal, where the second cancellation signal set may include n second cancellation signals.

During specific implementation, the cancellation antenna array is configured to multiply a scattering parameter matrix of the cancellation antenna array by the third transmit signal, to obtain the second cancellation signal set. The scattering parameter matrix of the cancellation antenna array and a scattering parameter matrix of the transceiver antenna array are the same in their respective corresponding operating frequencies or have a multiple relationship in their respective corresponding operating frequencies, and the scattering parameter matrix of the transceiver antenna array is multiplied by the first transmit signal, to generate an interference signal set, where the interference signal set includes an interference signal caused by the first transmit signal on each receive antenna.

It should be noted that a physical structure of the cancellation antenna of the cancellation antenna array is the same as that of the transceiver antenna in the transceiver antenna array, and operating statuses of the cancellation antenna and the transceiver antenna are the same on their respective operating frequencies. Therefore, the scattering parameter matrix of the cancellation antenna array is equal to or has a multiple relationship with the scattering parameter matrix of the transceiver antenna array. Further, the cancellation antenna array may reconstruct an interference signal generated by the transceiver antenna, and then phase shift is performed on the interference signal generated by the cancellation antenna array, so that an amplitude of the cancellation signal is equal to that of the interference signal, and a phase of the cancellation signal differs from that of the interference signal by 180 degrees, to cancel out radio frequency interference. Specific implementations of generating the second cancellation signal set by using the scattering parameter matrix of the cancellation antenna array and the third transmit signal, and generating the interference signal set by using the scattering parameter matrix of the transceiver antenna array and the first transmit signal are described in the method embodiment.

It may be understood that, after the up-conversion circuit 2021 shifts a frequency of a signal to obtain a high-frequency signal, to enable a subsequently obtained first cancellation signal to cancel out an interference signal, down-conversion processing further needs to be performed on an up-converted signal, so as to reduce the frequency to an original frequency, that is, down-conversion processing needs to be performed on the second cancellation signal by using the down-conversion circuit.

Specifically, the down-conversion circuit 2023 is configured to perform down-conversion on the second cancellation signals in the second cancellation signal set by using the local oscillation signal, to obtain the first cancellation signal set. That is, a frequency of the first cancellation signal in the first cancellation set is the same as a frequency of a corresponding interference signal.

It can be learned from the foregoing description that, in this embodiment, an up-conversion operation may be performed on the second transmit signal, to increase the frequency of the second transmit signal. This reduces the size of the cancellation antenna in the cancellation antenna array and reduces a space occupied by the communications device.

In addition, it should be noted that after up-conversion, the scattering parameter matrix of the cancellation antenna and the scattering parameter matrix of the transceiver antenna can only be consistent on one frequency. This affects bandwidth for interference cancellation to some extent.

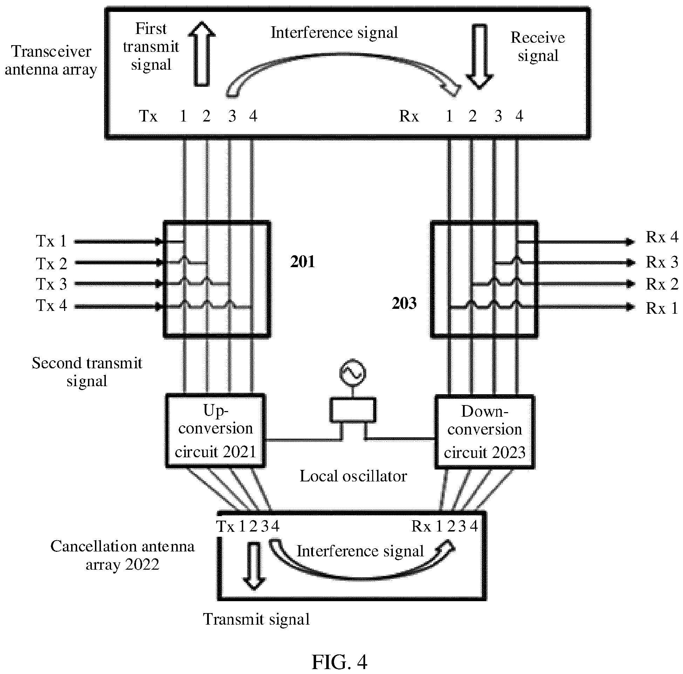

For ease of understanding the communications device provided in this application, refer to a specific schematic diagram of the communications device shown in FIG. 4. In this figure, an example in which the transceiver antenna array includes four transmit antennas and four receive antennas is used for description. Transmit ports corresponding to the four transmit antennas are respectively named Tx 1, Tx 2, Tx 3, and Tx 4, and receive ports corresponding to the four receive antennas are respectively named Rx 1, Rx 2, Rx 3, and Rx 4. A radio frequency signal corresponding to each of the four transmit antennas enters the power splitter circuit 201, and is divided into a first transmit signal and a second transmit signal. The first transmit signal is transmitted to a corresponding transmit port. The second transmit signal enters the up-conversion circuit 2021, and the up-conversion circuit 2021 performs up-conversion processing on the second transmit signal by using a local oscillation signal provided by a local oscillator, to obtain a third transmit signal. The third transmit signal is transmitted to a corresponding transmit port in the cancellation antenna array 2022. After the third transmit signal enters the transmit port, same as the situation in the transmit port in the transceiver antenna array: A part of energy is sent out, and a small part of energy arrives at a receive port to form an interference signal, that is, a second cancellation signal. Down-conversion processing is performed on the second cancellation interference signal in the down-conversion circuit 2023, and then phase shift processing is performed on the second cancellation signal, to obtain a first cancellation signal, so that the first cancellation signal is equal in amplitude and opposite in phase to an interference signal. In the combination circuit 203, the corresponding interference signal is canceled out by using the first cancellation signal, to obtain an actual received signal corresponding to each receive antenna.

It should be noted that a quantity of transmit antennas and a quantity of receive antennas in the transceiver antenna array may be equal or not equal. This is not limited herein in this embodiment.

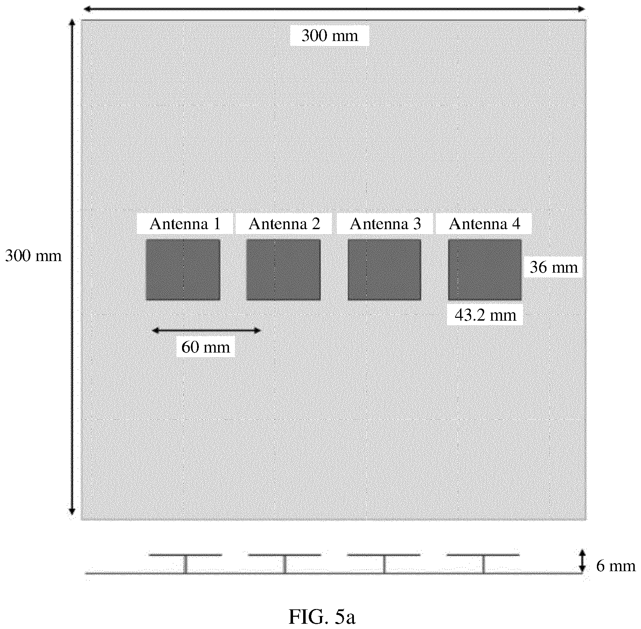

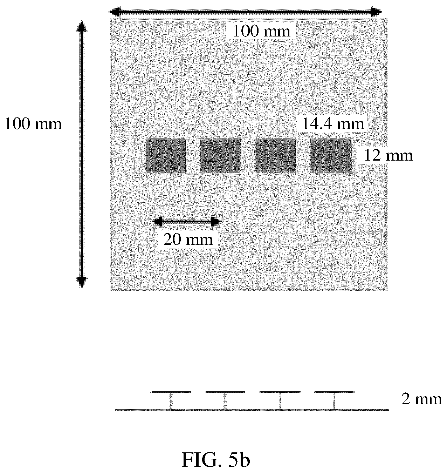

To describe operating statuses of a cancellation antenna and a transceiver antenna in their respective operating frequencies, a patch antenna (patch antenna) is used as an example for description. FIG. 5a and FIG. 5b show two patch antenna arrays. Each patch antenna array includes four antenna units, and physical structures of the two antenna arrays are the same. Compared with a size of an antenna in FIG. 5a, a size of an antenna in FIG. 5b is reduced by three times. For example, in FIG. 5a, an area of a metal floor is 300 mm*300 mm, an area of a patch is 43.2 mm*36 mm, and a height from the patch to the metal floor is 6 mm; in FIG. 5b, an area of a metal floor is 100 mm*100 mm, an area of a patch is 14.4 mm*12 mm, and a height from the patch to the metal floor is 2 mm.

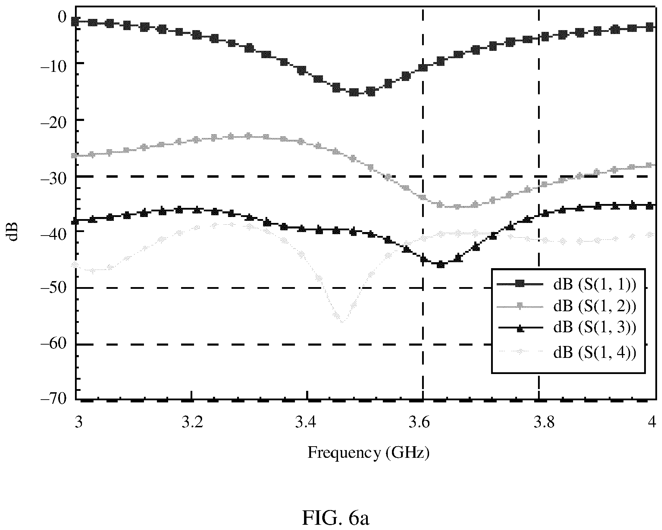

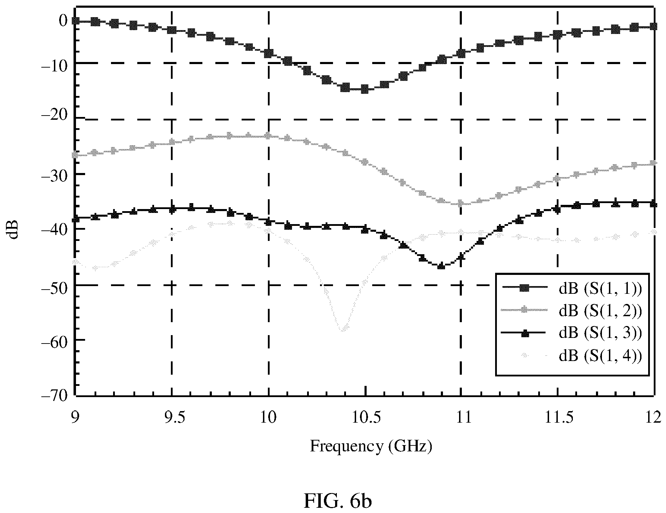

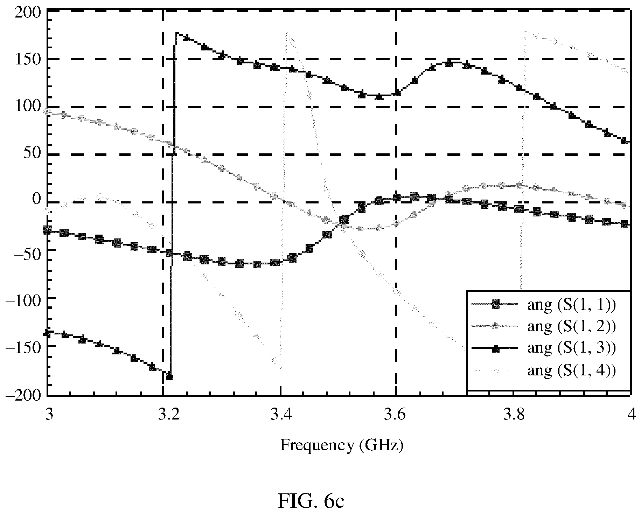

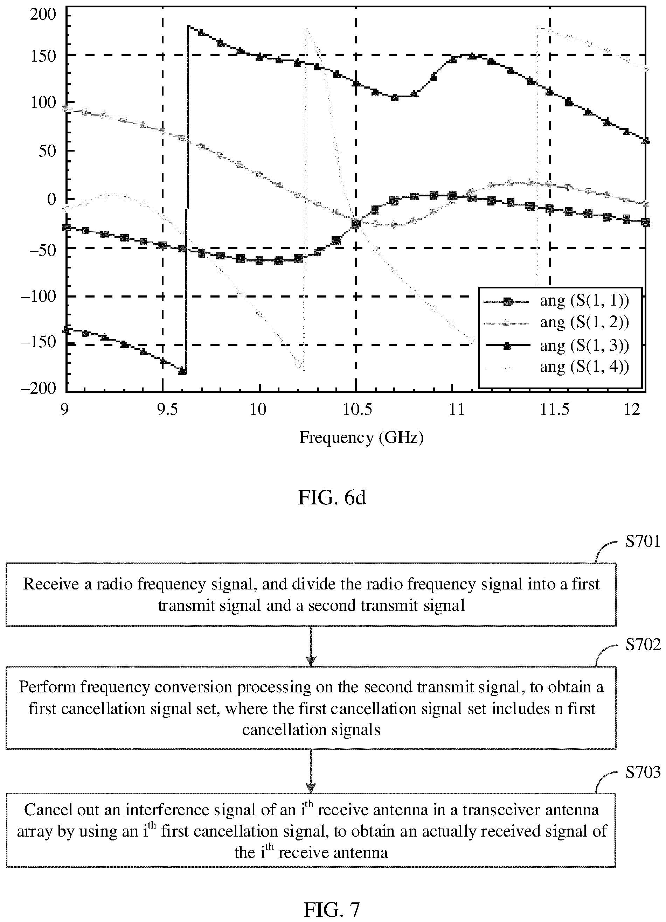

Scattering parameter matrices S of two antennas are obtained by simulating the two antennas, and simulation results are shown in FIG. 6a to FIG. 6d. Amplitude simulation parameters are shown in FIG. 6a and FIG. 6b, and phase simulation parameters are shown in FIG. 6c and FIG. 6d. It can be learned from the foregoing simulation results that a center frequency of an antenna a is 3.5 GHz, and a center frequency of an antenna b is 10.5 GHz. It can be learned from Table 1 and Table 2 that, in corresponding frequencies, a same scattering parameter matrix is obtained by simulating the antenna in FIG. 5a and the antenna in FIG. 5b, where the same scattering parameter matrix includes a same amplitude and a same phase. Therefore, when it is ensured that the scattering parameter matrix remains unchanged, a size of the cancellation antenna is reduced by three times, a three-dimensional volume of the cancellation antenna may be reduced by 27 times, and the volume of the cancellation antenna is greatly reduced.

Table 1 Amplitude comparison of simulated scattering parameters

| Frequency (GHz) | S11 (dB) | S12 (dB) | S13 (dB) | S14 (dB) | Frequency (GHz) | S11 (dB) | S12 (dB) | S13 (dB) | S14 (dB) |
|---|---|---|---|---|---|---|---|---|---|
| 3 | -2.43731 | -26.5734 | -37.8673 | -45.7581 | 9 | -2.40054 | -26.6758 | -37.8695 | -45.7356 |
| 3.1 | -3.272 | -25.3357 | -36.7419 | -43.979 | 9.3 | -3.21273 | -25.4333 | -36.7401 | -44.2183 |
| 3.2 | -4.70608 | -23.7692 | -35.9483 | -39.3762 | 9.6 | -4.6098 | -23.8672 | -36.0503 | -39.6081 |
| 3.3 | -7.28452 | -23.0514 | -37.337 | -38.9064 | 9.9 | -7.11678 | -23.1498 | -37.562 | -39.0927 |
| 3.4 | -11.7232 | -24.2429 | -39.4707 | -45.1181 | 10.2 | -11.3931 | -24.2819 | -39.4369 | -45.3206 |
| 3.5 | -15.1064 | -28.0719 | -40.1272 | -48.8938 | 10.5 | -14.8909 | -27.9405 | -39.8189 | -49.4288 |
| 3.6 | -10.8146 | -33.9522 | -44.7904 | -41.1085 | 10.8 | -10.875 | -33.5899 | -45.1758 | -41.3468 |
| 3.7 | -7.30657 | -34.9995 | -41.8139 | -40.2764 | 11.1 | -7.33917 | -35.0048 | -42.0575 | -40.5291 |
| 3.8 | -5.36301 | -31.9034 | -37.0287 | -41.3186 | 11.4 | -5.38193 | -31.9898 | -36.9334 | -41.5865 |
| 3.9 | -4.2113 | -29.5303 | -35.3579 | -41.3772 | 11.7 | -4.22583 | -29.5817 | -35.2819 | -41.5664 |
| 4 | -3.46058 | -28.1422 | -35.2765 | -40.2102 | 12 | -3.46143 | -28.1856 | -35.2659 | -40.3244 |

Table 2 Phase comparison of simulated scattering parameters

| Frequency (GHz) | S11 (dB) | S12 (dB) | S13 (dB) | S14 (dB) | Frequency (GHz) | S11 (dB) | S12 (dB) | S13 (dB) | S14 (dB) |
|---|---|---|---|---|---|---|---|---|---|
| 3 | -28.5396 | 94.0634 | -133.905 | -8.2839 | 9 | -28.8591 | 93.7532 | -133.911 | -9.37391 |
| 3.1 | -39.6319 | 81.5849 | -148.794 | 4.5047 | 9.3 | -39.8292 | 81.4867 | -149.441 | 3.53905 |
| 3.2 | -51.3739 | 62.7363 | -176.223 | -34.4256 | 9.6 | -51.4479 | 62.7821 | -177.098 | -34.2215 |
| 3.3 | -61.6223 | 35.0785 | 153.951 | -95.9079 | 9.9 | -61.601 | 35.4684 | 153.914 | -94.8643 |
| 3.4 | -61.0613 | 3.40657 | 140.597 | -172.309 | 10.2 | -61.4874 | 4.32429 | 142.19 | -169.24 |
| 3.5 | -22.523 | -22.6393 | 122.202 | -17.2663 | 10.5 | -25.5562 | -21.4839 | 121.142 | -21.6531 |
| 3.6 | 4.80197 | -21.9798 | 114.029 | -93.1278 | 10.8 | 3.06648 | -22.5482 | 109.242 | -94.9003 |
| 3.7 | 2.32112 | 9.91265 | 145.681 | -143.947 | 11.1 | 1.24915 | 7.80016 | 148.612 | -144.989 |
| 3.8 | -6.09112 | 17.5795 | 122.608 | -177.347 | 11.4 | -6.96764 | 16.66 | 123.55 | -177.621 |
| 3.9 | -14.8234 | 9.00598 | 90.8036 | 161.101 | 11.7 | -15.5284 | 8.34549 | 90.6713 | 161.464 |
| 4 | -23.1984 | -4.70379 | 62.1178 | 134.865 | 12 | -23.7478 | -5.48416 | 61.5799 | 135.085 |

It should be noted that, on a premise that antennas are placed in various homogeneous medium, this embodiment is not only applicable to the patch antenna, but also applicable to an antenna of another form.

In actual application, to avoid affecting power of a transmit signal of a transmit antenna, when a radio frequency signal is divided by using the power splitter circuit, strength of a first transmit signal transmitted to the transceiver antenna array is usually far greater than strength of a second transmit signal transmitted to the cancellation circuit, that is, an amplitude of the second transmit signal is far less than an amplitude of the first transmit signal. In this case, an amplitude of an obtained first cancellation signal is less than an amplitude of a corresponding interference signal. In addition, when frequency conversion processing is performed on the second transmit signal, an amplitude of a frequency-converted signal may cause that the amplitude of the first cancellation signal is different from the amplitude of the corresponding interference signal. To ensure that the amplitude of the first cancellation signal is the same as the amplitude of the corresponding interference signal, the amplitude of the first cancellation signal is adjusted before the interference signal is canceled out by using the first cancellation signal.

Specifically, the communications device further includes a gain amplification circuit. The gain amplification circuit is configured to: when an amplitude of the $i^{th}$ first cancellation signal is not equal to an amplitude of the interference signal of the $i^{th}$ receive antenna, adjust the amplitude of the $i^{th}$ first cancellation signal to be equal to the amplitude of the interference signal of the $i^{th}$ receive antenna. That is, the gain amplification circuit may be located before the cancellation circuit and the combination circuit. Before the combination circuit cancels out the interference signal by using the first cancellation signal, the gain amplification circuit first adjusts the amplitude of the first cancellation signal.

In a possible implementation of this embodiment, the communications device may further include a local oscillator. The local oscillator is configured to provide the local oscillation signal for the up-conversion circuit, or provide the local oscillation signal for the down-conversion circuit.

In addition, in actual application, to avoid introducing a higher-order harmonic wave into the obtained third transmit signal when the up-conversion operation is performed, the communications device may further include a bandpass filter. The bandpass filter is configured to filter the third transmit signal and send a filtered third transmit signal to the cancellation antenna array. In addition, to avoid interference caused by a signal transmitted by the cancellation antenna array to another device, the cancellation antenna array may be placed in a shielding box. To avoid affecting an operating status of the cancellation antenna, a wave-absorbing material may be attached in the shielding box.

Method embodiment

FIG. 7 is a flowchart of a radio frequency interference cancellation method according to an embodiment of this application. As shown in FIG. 7, the method may include the following steps.

S701: Receive a radio frequency signal, and divide the radio frequency signal into a first transmit signal and a second transmit signal.

In this embodiment, for a radio frequency signal corresponding to each transmit antenna in a transceiver antenna array, the radio frequency signal is divided into two signals: a first transmit signal and a second transmit signal. The first transmit signal is sent through a corresponding transmit antenna in the transceiver antenna array, and interferes with each receive antenna in the transceiver antenna array. That is, after the first transmit signal enters a corresponding transmit port in the transceiver antenna array, a part of the signal is sent through the transmit antenna, and a small part of the signal arrives at a receive port and causes interference to a signal of a receive antenna, that is, is an interference signal.

S702: Perform frequency conversion processing on the second transmit signal, to obtain a first cancellation signal set, where the first cancellation signal set includes n first cancellation signals.

In this embodiment, frequency conversion processing is performed on each second transmit signal, to obtain the first cancellation signal set, where the first cancellation signal set includes n first cancellation signals, and n is a quantity of receive antennas in the transceiver antenna array. That is, a plurality of cancellation signals can be obtained by using one second transmit signal, so that a plurality of interference signals can be canceled at a time.

In a possible implementation, performing frequency conversion processing on the second transmit signal, to obtain a first cancellation signal set may be implemented by performing the following steps.

(1) Perform up-conversion on the second transmit signal by using a local oscillation signal, to obtain a third transmit signal.

In this embodiment, the local oscillation signal is multiplied by the second transmit signal, and a high-frequency signal obtained through multiplication is extracted, where the high-frequency signal is the third transmit signal. That is, the second transmit signal is shifted to a high frequency by using the local oscillation signal.

During specific implementation, a cancellation antenna array obtains a second cancellation signal set based on the third transmit signal. A frequency of the local oscillation signal is determined based on an antenna size reduction multiplier and a frequency of the second transmit signal, where the antenna size reduction multiplier is determined by dividing a size of the transceiver antenna array by a size of the cancellation antenna array. That is, the frequency of the local oscillation signal is determined based on a size reduction multiplier of the cancellation antenna relative to the transceiver antenna.

(2) Obtain the second cancellation signal set based on the third transmit signal, where the second cancellation signal set includes n second cancellation signals.

After obtaining the third transmit signal, the second cancellation signal set is obtained based on the third transmit signal, where the second cancellation signal set includes n second cancellation signals, and n is the quantity of receive antennas in the transceiver antenna array.

During specific implementation, obtaining the second cancellation signal set based on the third transmit signal includes: multiplying a scattering parameter matrix of the cancellation antenna array by the third transmit signal, to obtain the second cancellation signal set. The scattering parameter matrix of the cancellation antenna array is the same as a scattering parameter matrix of the transceiver antenna array, and the scattering parameter matrix of the transceiver antenna array is multiplied by the first transmit signal, to generate an interference signal set, where the interference signal set includes n interference signals. n is the quantity of receive antennas in the transceiver antenna array, that is, one transmit signal may cause interference to all receive antennas.

The scattering parameter matrix of the transceiver antenna array is determined based on a signal entering the transmit port and a signal output from the receive port. This is specifically described in a subsequent embodiment.

(3) Perform down-conversion on the second cancellation signals in the second cancellation signal set by using the local oscillation signal, to obtain the first cancellation signal set.

To ensure that the interference signal can be completely canceled out, down-conversion processing further needs to be performed on the second cancellation signals in the second cancellation signal set, to obtain the first cancellation signal set. Specifically, the second cancellation signal is multiplied by the local oscillation signal, and a low-frequency signal, that is, the first cancellation signal, is extracted.

S703: Cancel out an interference signal of an $i^{th}$ receive antenna in the transceiver antenna array by using an $i^{th}$ first cancellation signal, to obtain an actual received signal of the $i^{th}$ receive antenna.

In this embodiment, after a first cancellation signal corresponding to each receive antenna is obtained, the first cancellation signal may be used to cancel out an interference signal of the corresponding receive antenna, to obtain an actual received signal received by the receive antenna. The interference signal of the $i^{th}$ receive antenna is equal in amplitude and opposite in phase to the $i^{th}$ first cancellation signal, and i is equal to 1-n.

It may be understood that, to ensure that the first cancellation signal can completely cancel out the interference signal, it needs to be ensured that an amplitude of the first cancellation signal is equal to that of the interference signal. If the amplitude of the first cancellation signal is not equal to that of the interference signal before combination, the amplitude of the first cancellation signal may be adjusted. Specifically, the amplitude of the $i^{th}$ first cancellation signal is adjusted, so that an adjusted amplitude of the $i^{th}$ first cancellation signal is equal to the amplitude of the interference signal of the $i^{th}$ receive antenna.

It can be learned from the foregoing embodiment that, in the radio frequency interference cancellation method provided in this embodiment, before the radio frequency signal is sent through the transmit antenna in the transceiver antenna array, the radio frequency signal is divided into two signals: the first transmit signal and the second transmit signal. The first transmit signal is sent through the transmit antenna in the transceiver antenna array, and interferes with each receive antenna. Frequency conversion processing is performed on the second transmit signal, to obtain the first cancellation signal set, that is, a plurality of first cancellation signals may be reconstructed for one radio frequency signal, and interference signals of a plurality of receive antennas are canceled out by using the plurality of first cancellation signals. This improves quantity of a received signal of each receive antenna.

For ease of understanding generation of a cancellation signal and an interference signal, and a specific cancellation principle of this application, the following provides a description.

In this embodiment, each scattering parameter in the scattering parameter matrix of the transceiver antenna array is equal to a signal output by a receive port divided by a signal entering a transmit port. When the transceiver antenna array includes n transmit ports and n receive ports, the scattering parameter matrix of the transceiver antenna array includes n*n scattering parameters in total, and each scattering parameter may be obtained through calculation according to the following formula:

$$S_{Rxi,Txj} = b_{Rxi} \, / \, a_{Txj} \qquad (1)$$

$a_{Txj}$ represents an input signal of a transmit port j, and $b_{Rxi}$ represents an output signal of a receive port i. In this case, the scattering parameter matrix corresponding to the transceiver antenna array is:

$$S = \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix}$$

(2)

When the transceiver antenna array includes n transmit ports, there are n radio frequency signals in total, and each radio frequency signal is divided into two signals: a first transmit signal and a second transmit signal, which is specifically shown in formula (3):

$$\begin{bmatrix} a1 \\ a2 \\ \cdots \\ an \end{bmatrix} = \begin{bmatrix} a_{Tx1}^{up} \\ a_{Tx2}^{up} \\ \cdots \\ a_{Txn}^{up} \end{bmatrix} + \begin{bmatrix} a_{TX1}^{down} \\ a_{TX2}^{down} \\ \cdots \\ a_{TXn}^{down} \end{bmatrix}$$

(3)

$an$ represents a radio frequency signal corresponding to an nth transmit port, $a^{up}_{Txn}$ represents a first transmit signal obtained by dividing an $n^{th}$ radio frequency signal, and $a^{down}_{Txn}$ represents a second transmit signal obtained by dividing the $n^{th}$ radio frequency signal.

A relationship between the first transmit signal and the second transmit signal may be expressed as:

$$\begin{bmatrix} a_{Tx1}^{up} \\ a_{Tx2}^{up} \\ \cdots \\ a_{Txn}^{up} \end{bmatrix} = C_1 * \begin{bmatrix} a_{TX1}^{down} \\ a_{TX2}^{down} \\ \cdots \\ a_{TXn}^{down} \end{bmatrix}$$

(4)

$C_1 >> 1$.

Because each transmit port causes interference to any receive port, an interference signal $b^{up}_{Rxi}$ received by the receive port i is:

$$b^{up}_{Rxi} = S_{Rxi,Tx1} * a^{up}_{Tx1} + S_{Rxi,Tx2} * a^{up}_{Tx2} + \ldots + S_{Rxi,Txn} * a^{up}_{Txn}$$

(5)

In this case, all interference received by all receive ports may be represented by using the following matrix:

$$\begin{bmatrix} b_{RX1}^{up} \\ b_{RX2}^{up} \\ \cdots \\ b_{RXn}^{up} \end{bmatrix} = \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * \begin{bmatrix} a_{Tx1}^{up} \\ a_{Tx2}^{up} \\ \cdots \\ a_{Txn}^{up} \end{bmatrix}$$

(6)

For a full-duplex system, the transceiver antenna array receives a signal while transmitting a signal. Therefore, in addition to receiving an interference signal, a receive port receives a signal that actually needs to be received, that is, an actual received signal.

$$\begin{bmatrix} d_{RX1}^{up} \\ d_{RX2}^{up} \\ \cdots \\ d_{RXn}^{up} \end{bmatrix} = \begin{bmatrix} b_{RX1}^{up} \\ b_{RX2}^{up} \\ \cdots \\ b_{RXn}^{up} \end{bmatrix} + \begin{bmatrix} c_{RX1}^{up} \\ c_{RX2}^{up} \\ \cdots \\ c_{RXn}^{up} \end{bmatrix} \qquad (7)$$

$c_{RXn}^{up}$ represents an actual received signal corresponding to an $n^{th}$ receive port, and $d_{RXn}^{up}$ represents a total signal received by the $n^{th}$ receive port.

The second transmit signal enters an up-conversion circuit for up-conversion processing. Specifically, the second transmit signal is multiplied by a sinusoidal signal, and a frequency of the sinusoidal signal is $f_0$. In this case, a frequency of the third transmit signal obtained after up-conversion is $f = f + f_0$. When up-conversion processing is performed on the second transmit signal, not only a frequency of the second transmit signal may be changed, but also an amplitude of the second transmit signal may be changed, that is, the change is equal to a value obtained by multiplying the amplitude of the second signal by a constant. After up-conversion processing is performed, the obtained third transmit signal may be expressed as:

$$C_2 * \begin{bmatrix} a_{TX1}^{down} \\ a_{TX2}^{down} \\ \cdots \\ a_{TXn}^{down} \end{bmatrix} \qquad (8)$$

After the third transmit signal enters the cancellation antenna array, an operating status of the cancellation antenna array is the same as that of the transceiver antenna array. That is, a part of energy is sent out, and a small part of energy arrives at a receive port of the cancellation antenna to cause interference. Because the scattering parameter matrix of the cancellation antenna array is equal to the scattering parameter matrix of the transceiver antenna array, the generated second cancellation signal set may be expressed as:

$$\begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * C_2 * \begin{bmatrix} a_{TX1}^{down} \\ a_{TX2}^{down} \\ \cdots \\ a_{TXn}^{down} \end{bmatrix} \qquad (9)$$

Because a frequency of the second cancellation signals in the second cancellation signal set generated by the cancellation antenna array is still f, to ensure that an interference signal can be subsequently canceled out, down-conversion processing further needs to be performed on the second cancellation signal. The first cancellation signal set obtained through down-conversion processing may be expressed as:

$$
\begin{bmatrix} b_{RX1}^{down} \\ b_{RX2}^{down} \\ \cdots \\ b_{RXn}^{down} \end{bmatrix} = C_3 * \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * C_2 * \begin{bmatrix} a_{TX1}^{down} \\ a_{TX2}^{down} \\ \cdots \\ a_{TXn}^{down} \end{bmatrix}
$$

$$
= C_3 * C_2 * \frac{1}{C1} * \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * \begin{bmatrix} a_{Tx1}^{up} \\ a_{Tx2}^{up} \\ \cdots \\ a_{Txn}^{up} \end{bmatrix}
$$

$$
= C * \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * \begin{bmatrix} a_{Tx1}^{up} \\ a_{Tx2}^{up} \\ \cdots \\ a_{Txn}^{up} \end{bmatrix} \tag{10}
$$

Finally, an interference signal generated by the transceiver antenna array and a cancellation signal generated by the cancellation antenna array are canceled out in a combination circuit. Because the scattering parameter matrix of the cancellation antenna array and the scattering parameter matrix of the transceiver antenna array are the same, transmit signals are the same or different by a fixed multiple, and interference caused by a transmit port to a receive port of the cancellation antenna array and interference caused by a transmit port to a receive port of the transceiver antenna array are also the same or different by a fixed multiple, an interference signal output by the receive port of the cancellation antenna is processed, so that an amplitude of an interference signal output by the receive port of the transceiver antenna is the same as an amplitude of an interference signal output by the receive port of the cancellation antenna, and a phase of the interference signal output by the receive port of the transceiver antenna differs from a phase of the interference signal output by the receive port of the cancellation antenna by 180° (or an integer multiple of 180°). Then, the signals are combined. Output signals of the combiner are as follows:

$$
\begin{bmatrix} d_{RX1}^{up} \\ d_{RX2}^{up} \\ \cdots \\ d_{RXn}^{up} \end{bmatrix} + e^{j\pi} * \begin{bmatrix} b_{RX1}^{down} \\ b_{RX2}^{down} \\ \cdots \\ b_{RXn}^{down} \end{bmatrix} = \begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * \begin{bmatrix} a_{Tx1}^{up} \\ a_{Tx2}^{up} \\ \cdots \\ a_{Txn}^{up} \end{bmatrix} + \begin{bmatrix} c_{RX1}^{up} \\ c_{RX2}^{up} \\ \cdots \\ c_{RXn}^{up} \end{bmatrix} -
$$

$$
\begin{bmatrix} S_{Rx1,Tx1} & S_{Rx1,Tx2} & \cdots & S_{Rx1,Txn} \\ S_{Rx2,Tx1} & S_{Rx2,Tx2} & \cdots & S_{Rx2,Txn} \\ \cdots & \cdots & \cdots & \cdots \\ S_{Rxn,Tx1} & S_{Rxn,Tx2} & \cdots & S_{Rxn,Txn} \end{bmatrix} * \begin{bmatrix} a_{Tx1}^{up} \\ a_{Tx2}^{up} \\ \cdots \\ a_{Txn}^{up} \end{bmatrix} = \begin{bmatrix} c_{RX1}^{up} \\ c_{RX2}^{up} \\ \cdots \\ c_{RXn}^{up} \end{bmatrix} \tag{11}
$$

It should be noted that, in this embodiment, an example in which the scattering parameter matrix of the transceiver antenna array is equal to the scattering parameter matrix of the cancellation antenna array is used for description. Certainly, there may be a multiple relationship between the scattering parameter matrix of the transceiver antenna array and the scattering parameter matrix of the cancellation antenna array.

For ease of understanding a cancellation principle in this application, FIG. 4 is used as an example for description. To be specific, an example in which a transceiver antenna array includes four transmit ports and four receive ports is used for description.

1. A scattering parameter matrix of the transceiver antenna array is:

$$S = \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} \quad (12)$$

2. A radio frequency signal enters a power splitter circuit and is divided into two signals, which may be expressed as:

$$\begin{bmatrix} a1 \\ a2 \\ a3 \\ a4 \end{bmatrix} = \begin{bmatrix} a^{up}_{Tx1} \\ a^{up}_{Tx2} \\ a^{up}_{Tx3} \\ a^{up}_{Tx4} \end{bmatrix} + \begin{bmatrix} a^{down}_{TX1} \\ a^{down}_{TX2} \\ a^{down}_{TX3} \\ a^{down}_{TX4} \end{bmatrix} \quad (13)$$

$a^{up}_{Txj}$ represents a first transmit signal corresponding to a $j^{th}$ radio frequency signal, $a^{down}_{Txj}$ represents a second transmit signal corresponding to the $j^{th}$ radio frequency signal, and a relationship between the two may be expressed as:

$$\begin{bmatrix} a^{up}_{Tx1} \\ a^{up}_{Tx2} \\ a^{up}_{Tx3} \\ a^{up}_{Tx4} \end{bmatrix} = C_1 * \begin{bmatrix} a^{down}_{TX1} \\ a^{down}_{TX2} \\ a^{down}_{TX3} \\ a^{down}_{TX4} \end{bmatrix} \quad (14)$$

3. An interference signal received by each receive port may be expressed as:

$$b^{up}_{Rxi} = S_{Rxi,Tx1} * a^{up}_{Tx1} + S_{Rxi,Tx2} * a^{up}_{Tx2} + S_{Rxi,Tx3} * a^{up}_{Tx3} + S_{Rxi,Tx4} * a^{up}_{Tx4} \quad (15)$$

In this case, a set of interference signals received by all receive ports may be expressed as:

$$\begin{bmatrix} b^{up}_{RX1} \\ b^{up}_{RX2} \\ b^{up}_{RX3} \\ b^{up}_{RX4} \end{bmatrix} = \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * \begin{bmatrix} a^{up}_{Tx1} \\ a^{up}_{Tx2} \\ a^{up}_{Tx3} \\ a^{up}_{Tx4} \end{bmatrix} \quad (16)$$

4. When receiving the interference signal, each receive port also receives an external signal sent by an external device to the receive port, that is, an actual received signal. In this case, a total signal received by the receive port is:

$$
\begin{bmatrix} d_{RX1}^{up} \\ d_{RX2}^{up} \\ d_{RX3}^{up} \\ d_{RX4}^{up} \end{bmatrix} = \begin{bmatrix} b_{RX1}^{up} \\ b_{RX2}^{up} \\ b_{RX3}^{up} \\ b_{RX4}^{up} \end{bmatrix} + \begin{bmatrix} c_{RX1}^{up} \\ c_{RX2}^{up} \\ c_{RX3}^{up} \\ c_{RX4}^{up} \end{bmatrix}
\qquad (17)
$$

5. Up-conversion processing is performed on the second transmit signal to obtain a third transmit signal, where a frequency of the third transmit signal is $f = f + f_0$, f represents a frequency of the second transmit signal, and $f_0$ represents a frequency of a local oscillation signal. In this case, an amplitude of the third transmit signal is:

$$
C_2 * \begin{bmatrix} a_{TX1}^{down} \\ a_{TX2}^{down} \\ a_{TX3}^{down} \\ a_{TX4}^{down} \end{bmatrix}
\qquad (18)
$$

6. The third transmit signal enters a cancellation antenna array to obtain a second cancellation signal set, which may be expressed as:

$$
\begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * C_2 * \begin{bmatrix} a_{TX1}^{down} \\ a_{TX2}^{down} \\ a_{TX3}^{down} \\ a_{TX4}^{down} \end{bmatrix}
\qquad (19)
$$

7. Down-conversion processing is performed on second cancellation signals in the second cancellation signal set by using the local oscillation signal, to obtain a first cancellation signal set. In this case, the first cancellation signal set may be expressed as:

$$\begin{bmatrix} b_{RX1}^{down} \\ b_{RX2}^{down} \\ b_{RX3}^{down} \\ b_{RX4}^{down} \end{bmatrix} = C_3 * \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * C_2 * \begin{bmatrix} a_{TX1}^{down} \\ a_{TX2}^{down} \\ a_{TX3}^{down} \\ a_{TX4}^{down} \end{bmatrix}$$

$$= C_3 * C_2 * \frac{1}{C1} * \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * \begin{bmatrix} a_{Tx1}^{up} \\ a_{Tx2}^{up} \\ a_{Tx3}^{up} \\ a_{Tx4}^{up} \end{bmatrix}$$

$$= C * \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * \begin{bmatrix} a_{Tx1}^{up} \\ a_{Tx2}^{up} \\ a_{Tx3}^{up} \\ a_{Tx4}^{up} \end{bmatrix} \tag{20}$$

8. An amplitude and a phase of a first cancellation signal in the first cancellation signal set are adjusted, so that the first cancellation signal is equal in amplitude and opposite in phase to a corresponding interference signal. In this case, combined signals may be expressed as:

$$\begin{bmatrix} d_{RX1}^{up} \\ d_{RX2}^{up} \\ d_{RX3}^{up} \\ d_{RX4}^{up} \end{bmatrix} + e^{j\pi} * \begin{bmatrix} b_{RX1}^{down} \\ b_{RX2}^{down} \\ b_{RX3}^{down} \\ b_{RX4}^{down} \end{bmatrix} = \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * \begin{bmatrix} a_{Tx1}^{up} \\ a_{Tx2}^{up} \\ a_{Tx3}^{up} \\ a_{Tx4}^{up} \end{bmatrix} +$$

$$\begin{bmatrix} c_{RX1}^{up} \\ c_{RX2}^{up} \\ c_{RX3}^{up} \\ c_{RX4}^{up} \end{bmatrix} - \begin{bmatrix} S_{Rx1,Tx1} & S_{Rx1,Tx2} & S_{Rx1,Tx3} & S_{Rx1,Tx4} \\ S_{Rx2,Tx1} & S_{Rx2,Tx2} & S_{Rx2,Tx3} & S_{Rx2,Tx4} \\ S_{Rx3,Tx1} & S_{Rx3,Tx2} & S_{Rx3,Tx3} & S_{Rx3,Tx4} \\ S_{Rx4,Tx1} & S_{Rx4,Tx2} & S_{Rx4,Tx3} & S_{Rx4,Tx4} \end{bmatrix} * \begin{bmatrix} a_{Tx1}^{up} \\ a_{Tx2}^{up} \\ a_{Tx3}^{up} \\ a_{Tx4}^{up} \end{bmatrix} = \begin{bmatrix} c_{RX1}^{up} \\ c_{RX2}^{up} \\ c_{RX3}^{up} \\ c_{RX4}^{up} \end{bmatrix} \tag{21}$$

Application scenario embodiment

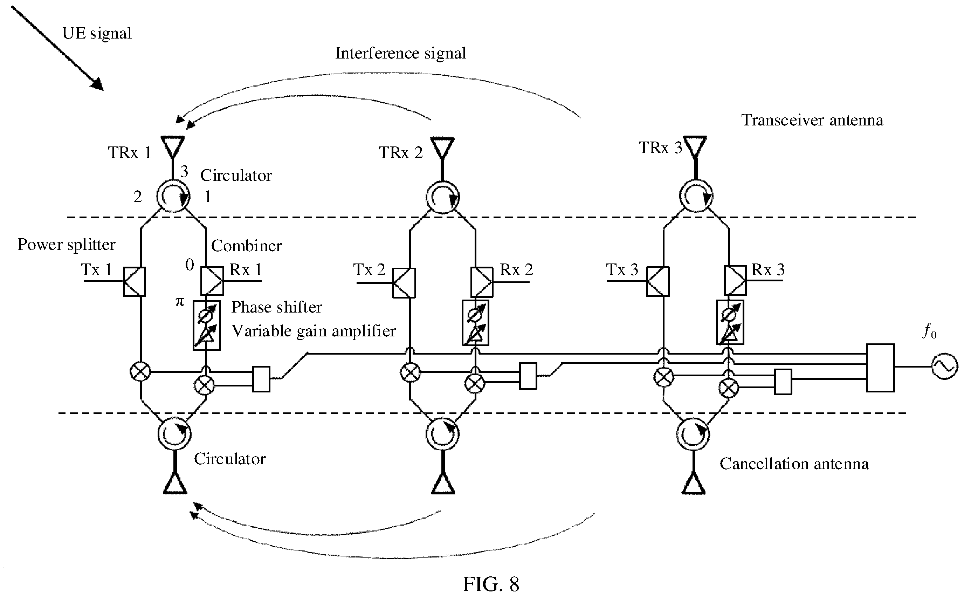

Refer to a diagram of an example of an application scenario shown in FIG. 8. A transceiver antenna, a cancellation antenna, a circulator, a power splitter, a combiner, a phase shifter, a variable gain amplifier, a frequency mixer, a local oscillator, and the like may be included. The transceiver antenna is configured to transmit and receive a signal. The cancellation antenna is configured to generate a cancellation signal, to cancel out an interference signal on the transceiver antenna. The circulator is a three-port component that is unidirectionally conducted and is usually used for antenna transceiving multiplexing. For example, a signal entering from a port 2 can be output only from a port 3, and a signal entering from the port 3 can be output only from a port 1. The port 2 is usually connected to an output link, the port 3 is connected to a transmit antenna, and the port 1 is connected to a receive link. Therefore, the circulator expands one antenna port into a transmit port (the port 2 of the circulator) and a receive port (the port 1 of the circulator). However, the port 2 and the port 1 cannot be completely isolated, and isolation is usually 30 dB to 40 dB. Therefore, a part of a transmit signal is leaked from the port 2 to the port 1. This causes interference to a received signal.

A radio frequency signal is first output through a radio frequency transmit link. It is assumed that a frequency of the radio frequency signal is f. Then, the radio frequency signal enters the power splitter for power splitting. To avoid affecting efficiency of a transmitter, unequal power splitting is usually performed on a signal. For example, a power of a signal on the transceiver antenna is far greater than a power of a signal on the cancellation antenna. Therefore, the power splitter may alternatively be replaced with a directional coupler. It should be noted that power split ratios of all power splitters or directional couplers need to be consistent. The signal passes through the power splitter. One signal enters the port 2 of the circulator, then the channel of signal is transmitted through the transceiver antenna, to form effective signal radiation. In addition, due to limited isolation of the circulator, a part of signal is leaked from the port 2 to the port 1. This causes interference to a receive end. The other signal passes through the frequency mixer for up-conversion. It is assumed that a frequency of the local oscillator is f0. After frequency mixing, a frequency of the signal changes to f + f0. The signal enters the cancellation antenna through the circulator, and similarly, a part of signal is transmitted. Then, a small part of signal is output as a coupling signal at the port 2 of the circulator through coupling between the circulator and the antenna. A frequency of the coupling signal is still f + f0. Then, the signal passes through the frequency mixer for down-conversion processing. The frequency changes back to f. Because an S parameter matrix of the cancellation antenna is consistent with that of the transceiver antenna in a frequency of f + f0, an interference signal (a cancellation signal) formed on the cancellation antenna is the same as an interference signal formed on the transceiver antenna, or an interference signal (a cancellation signal) formed on the cancellation antenna differs from an interference signal formed on the transceiver antenna only by a fixed multiple. Then, an amplitude and a phase of the cancellation signal are adjusted by using an adjustable phase shifter (Phase shifter, PA) and a variable gain amplifier (Variable Gain Amplifier, VGA), so that the cancellation signal is equal in amplitude and opposite in phase to the interference signal. Two signals are combined in the combiner, to cancel out all interference signals.

In this embodiment, not only the cancellation antenna and the transceiver antenna need to have the same S parameter matrix in their respective operating frequencies, but also the circulators connected to the cancellation antenna and the transceiver antenna also need to have the same S parameter matrix in operating frequency bands of the cancellation antenna and the transceiver antenna.

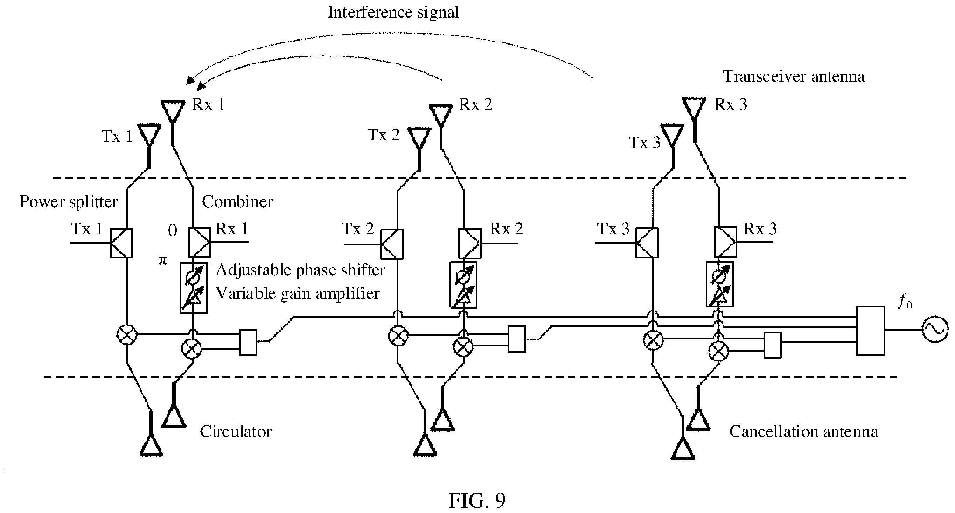

Refer to an embodiment of another scenario shown in FIG. 9. In this embodiment, an antenna is used for both receiving and transmitting. A transmit signal is isolated from a receive signal by using a circulator. In Embodiment 2, a transmit antenna and a receive antenna are in a separate antenna form, and other modules are the same as the modules in Embodiment 1. When antennas with transmitting and receiving separation are used, a diameter of the antenna is increased more than onefold, but the transmit antenna and the receive antenna do not need to be isolated by using a circulator. This greatly reduces hardware costs (hardware costs of the circulator are usually much higher than costs of the antenna). In addition, isolation between the transmit antenna and the receive antenna is increased based on a specific antenna design, and a better interference cancellation effect can be achieved through radio frequency cancellation in this solution.

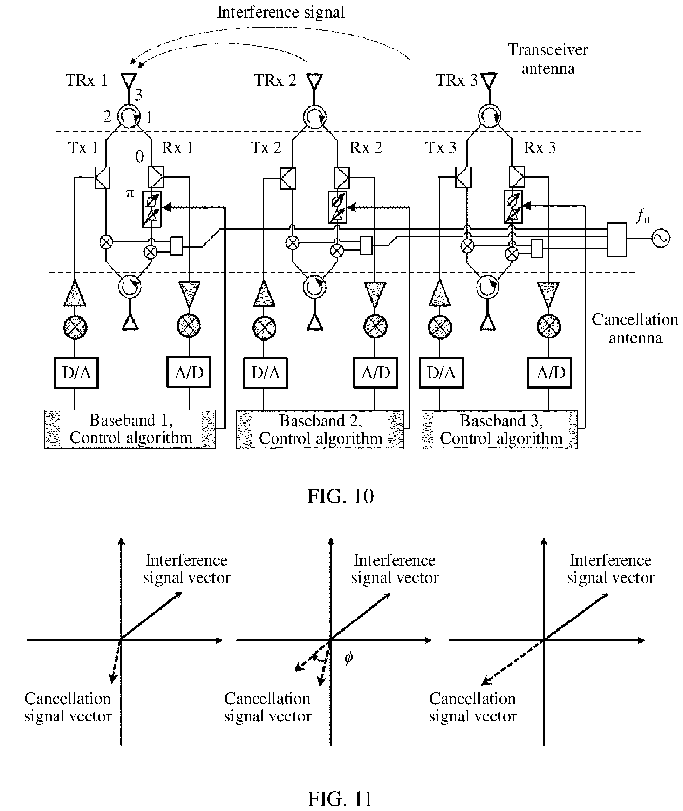

In the foregoing two embodiments, adjustment of a cancellation signal is basically fixed, for example, a phase shift and a gain are fixed. In actual application, because processing precision introduces an error, a cancellation depth is affected. To achieve an optimal cancellation effect, refer to an embodiment of still another scenario shown in FIG. 10. An adjustable phase shifter and a variable gain amplifier are added to adjust an amplitude and a phase of the cancellation signal, so that the amplitude of the cancellation signal is consistent with an amplitude of an interference signal, and the phase of the cancellation signal differs from a phase of the interference signal by 180 degrees. Certainly, the interference signal may alternatively be adjusted. In actual application, a signal may be transmitted by using a baseband, and is converted into a power radio frequency signal by performing D/A conversion, up-conversion, and a radio frequency amplifier. The signal enters a full-duplex transceiver unit, and a residual signal obtained after interference cancellation is output at an output end. The signal passes through a receive link, including a low noise amplifier (low noise amplifier, LNA), down-conversion, and A/D sampling, and finally arrives at the baseband for processing. The baseband adjusts a phase of the adjustable phase shifter and a gain of the variable gain amplifier based on a specific algorithm, to minimize an amplitude of a received residual interference signal.

For an algorithm for adjusting the phase and the amplitude, an interference cancellation process is actually a vector signal addition and subtraction process, as shown in FIG. 11. First, there is an interference signal, a phase of the phase shifter is adjusted to minimize an amplitude of a residual interference signal observed by the baseband, and then a gain of the amplifier is adjusted to minimize the amplitude of the residual interference signal observed by the baseband. The minimum value is crucial. Therefore, in this case, the obtained residual interference signal is a global minimum value, and corresponding values of the phase shifter and the gain amplifier are also optimal solutions. In FIG. 11, the phase shifter is used to adjust a phase of a signal, and another phase adjustment method is also applicable. For example, a plurality of delay lines (a fixed delay) may be used to adjust an amplitude of each signal. This can also achieve a phase adjustment effect.

The foregoing calibration can minimize an interference signal in a transceiver unit, that is, interference caused by a transmit channel 1 to a receive channel 1. However, because an S parameter matrix of the transceiver antenna and an S parameter matrix of the cancellation antenna are the same, after up-conversion and down-conversion, a cancellation signal vector differs from an interference signal vector only by a fixed multiple. Therefore, relative amplitudes and phases of different interference are the same. This minimizes interference in the transceiver unit, and also minimizes interference between other antennas. All interference is minimized by calibrating transceiver units in sequence. Therefore, the calibration process in this situation also has linear complexity.

It may be understood that the communications device and the radio frequency interference cancellation method provided in this application may not only be used for full-duplex radio frequency interference cancellation, but also be used to reduce coupling interference between unit antennas in an antenna array, that is, can be used in all scenarios in which a low mutual coupling antenna array is required. In addition, the technical method provided in this application may also be used in a full-duplex radar system. In some scenarios, a radar system needs to transmit and receive signals simultaneously, coupling between a transmit antenna and a receive antenna has specific impact on radar performance, and the solution provided in this application can reduce coupling between antennas without increasing an antenna aperture, and effectively reduce interference caused by a transmitted signal to a received signal.

Apparatus embodiment

Based on the foregoing method embodiment, this application further provides a radio frequency interference cancellation apparatus. The following describes the apparatus with reference to the accompanying drawings.

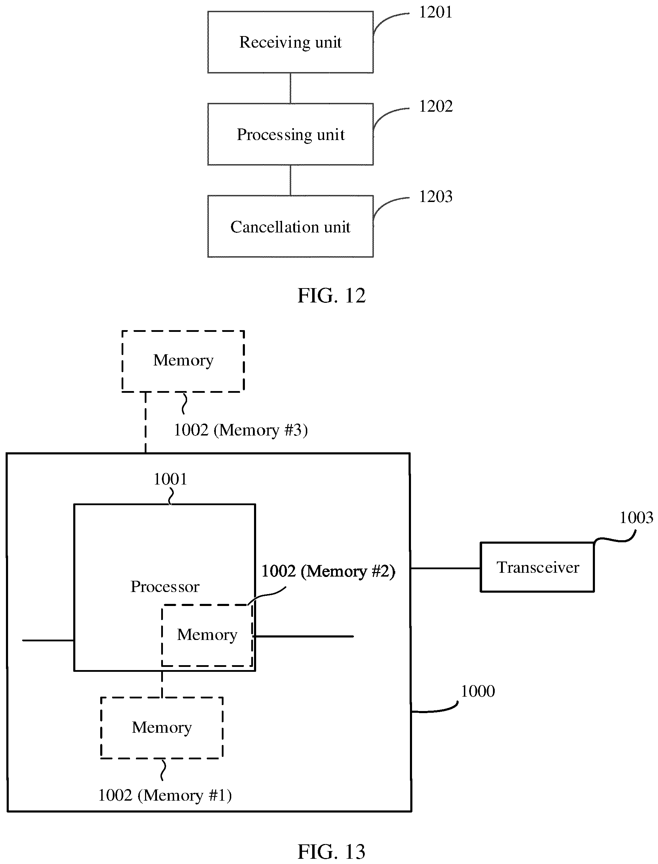

FIG. 12 is a diagram of a structure of a radio frequency interference cancellation apparatus according to an embodiment of this application. As shown in FIG. 12, the apparatus may include:

a receiving unit 1201, configured to receive a radio frequency signal, and divide the radio frequency signal into a first transmit signal and a second transmit signal, where the first transmit signal is sent through a corresponding transmit antenna in a transceiver antenna array, and interferes with each receive antenna in the transceiver antenna array;

a processing unit 1202, configured to perform frequency conversion processing on the second transmit signal, to obtain a first cancellation signal set, where the first cancellation signal set includes n first cancellation signals, and n is a quantity of receive antennas in the transceiver antenna array; and

a cancellation unit 1203, configured to cancel out an interference signal of an $i^{th}$ receive antenna in the transceiver antenna array by using an $i^{th}$ first cancellation signal, to obtain an actual received signal of the $i^{th}$ receive antenna, where the interference signal of the $i^{th}$ receive antenna is equal in amplitude and opposite in phase to the $i^{th}$ first cancellation signal, and i is equal to 1-n.

In a possible implementation, the processing unit includes:

an up-conversion subunit, configured to perform up-conversion on the second transmit signal by using a local oscillation signal, to obtain a third transmit signal;

an obtaining subunit, configured to obtain a second cancellation signal set based on the third transmit signal, where the second cancellation signal set includes n second cancellation signals; and

a down-conversion subunit, configured to perform down-conversion on the second cancellation signals in the second cancellation signal set by using the local oscillation signal, to obtain the first cancellation signal set.

In a possible implementation, the obtaining subunit is specifically configured to obtain the second cancellation signal set based on the third transmit signal by using a cancellation antenna array. A frequency of the local oscillation signal is determined based on an antenna size reduction multiplier and a frequency of the second transmit signal, where the antenna size reduction multiplier is determined by dividing a size of the transceiver antenna array by a size of the cancellation antenna array.

In a possible implementation, the obtaining subunit is specifically configured to: multiply a scattering parameter matrix of the cancellation antenna array by the third transmit signal, to obtain the second cancellation signal set, where the scattering parameter matrix of the cancellation antenna array and a scattering parameter matrix of the transceiver antenna array are the same in their respective corresponding operating frequencies or have a multiple relationship in their respective corresponding operating frequencies; and multiply the scattering parameter matrix of the transceiver antenna array by the first transmit signal, to generate an interference signal set, where the interference signal set includes n interference signals.

In a possible implementation, the apparatus further includes:

an adjusting unit, configured to: before the cancellation unit is executed, adjust the amplitude of the $i^{th}$ first cancellation signal, so that an adjusted amplitude of the $i^{th}$ first cancellation signal is equal to the amplitude of the interference signal of the $i^{th}$ receive antenna.

It should be noted that, for implementation of the units in this embodiment, refer to the foregoing method embodiment, and details are not described herein again in this embodiment.

In addition, an embodiment of this application further provides a computer-readable storage medium, where the computer-readable storage medium stores a program, and when the program is read and executed by one or more processors, the radio frequency interference cancellation method may be implemented.

FIG. 13 is a schematic diagram of a structure of a communications device 1000 according to an embodiment of this application. As shown in FIG. 13, the communications device 1000 is, for example, a user plane function UPF unit or a device of a similar functional unit. The communications device 1000 includes: a processor 1001 and a memory 1002, where the memory 1002 may be a memory (Memory #3) independent of the processor or a network device, or may be a memory inside the processor or a network device (Memory #1 or Memory #2). The memory 1002 may be a physically independent unit, or may be storage space, a network hard disk, or the like on a cloud server.

The memory 1002 is configured to store computer-readable instructions (or referred to as a computer program).

The processor 1001 is configured to read the computer-readable instructions to implement the radio frequency interference cancellation method.

Optionally, the memory 1002 (Memory #1) is located inside the apparatus.

Optionally, the memory 1002 (Memory #2) is integrated into the processor.

Optionally, the memory 1002 (Memory #3) is located outside the apparatus.

Optionally, the communications device further includes a transceiver 1003, configured to receive and transmit data.

In addition, the processor 1001 may be a central processing unit, a general-purpose processor, a digital signal processor, an application-specific integrated circuit, a field programmable gate array or another programmable logic device, a transistor logic device, a hardware component, or any combination thereof. The processor 1001 may implement or execute various example logical blocks, modules, and circuits described with reference to content disclosed in this application. Alternatively, the processor may be a combination of processors implementing a computing function, for example, a combination of one or more microprocessors or a combination of a digital signal processor and a microprocessor. In addition, the memory 1002 may include a volatile memory (volatile memory), for example, a random-access memory (random-access memory, RAM). The memory may alternatively include a non-volatile memory (non-volatile memory), for example, a flash memory (flash memory), a hard disk drive (hard disk drive, HDD), a solid-state drive (solid-state drive, SSD), a cloud storage (cloud storage), a network attached storage (network attached storage, NAS), or a network drive (network drive). The memory may alternatively include a combination of memories of the foregoing types, or another medium or product in any form that has a storage function.

It should be noted that the embodiments in this specification are all described in a progressive manner, each embodiment focuses on a difference from other embodiments, and for same or similar parts in the embodiments, refer to these embodiments. The apparatus disclosed in the embodiments is described simply because the apparatus corresponds to the method disclosed in the embodiments. For parts related to those of the method, refer to the description of the method.

It should be understood that in this application, "at least one (item)" means one or more, and "a plurality of" means two or more. The term "and/or" is used to describe an association relationship between associated objects, and indicate that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression means any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

It should be further noted that in this specification, relational terms such as first and second are only used to distinguish one entity or operation from another entity or operation, and do not necessarily require or imply that any of such actual relationships or sequences exists between these entities or operations. Moreover, the terms "include", "comprise", or any other variants are intended to cover a non-exclusive inclusion, so that a process, a method, an article, or a device that includes a list of elements not only includes those elements but also includes other elements that are not expressly listed, or further includes elements inherent to such a process, a method, an article, or a device. An element preceded by "includes a ..." does not, without more constraints, preclude the presence of additional identical elements in the process, method, article, or device that includes the element.

In combination with the embodiments disclosed in this specification, method or algorithm steps may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

The embodiments disclosed above are described to enable a person skilled in the art to implement or use this application. Various modifications made to the embodiments will be obvious to a person skilled in the art, and the general principles defined in this specification may also be implemented in other embodiments without departing from the spirit or scope of this application. Therefore, this application is not limited to these embodiments illustrated herein, but shall be construed in the widest scope consistent with the principles and novel features disclosed herein.

**Claims**

1. A communications device, wherein the device comprises a power splitter circuit, a transceiver antenna array, a cancellation circuit, and a combination circuit, wherein

the power splitter circuit is configured to divide a radio frequency signal into a first transmit signal and a second transmit signal, wherein the first transmit signal is sent through a corresponding transmit antenna in the transceiver antenna array, and interferes with each receive antenna in the transceiver antenna array;
the cancellation circuit is configured to perform frequency conversion processing on the second transmit signal, to obtain a first cancellation signal set, wherein the first cancellation signal set comprises n first cancellation signals, and n is a quantity of receive antennas in the transceiver antenna array; and
the combination circuit is configured to cancel out an interference signal of an $i^{th}$ receive antenna in the transceiver antenna array by using an $i^{th}$ first cancellation signal, to obtain an actual received signal of the $i^{th}$ receive antenna, wherein the interference signal of the $i^{th}$ receive antenna is equal in amplitude and opposite in phase to the $i^{th}$ first cancellation signal, and i is equal to 1-n.

2. The device according to claim 1, wherein the cancellation circuit comprises an up-conversion circuit, a cancellation antenna array, and a down-conversion circuit, wherein

the up-conversion circuit is configured to perform up-conversion on the second transmit signal by using a local oscillation signal, to obtain a third transmit signal;
the cancellation antenna array is configured to obtain a second cancellation signal set based on the third transmit signal, wherein the second cancellation signal set comprises n second cancellation signals; and
the down-conversion circuit is configured to perform down-conversion on the second cancellation signals in the second cancellation signal set by using the local oscillation signal, to obtain the first cancellation signal set.

3. The device according to claim 2, wherein a frequency of the local oscillation signal is determined based on an antenna size reduction multiplier and a frequency of the second transmit signal, wherein the antenna size reduction multiplier is determined by dividing an antenna size of the transceiver antenna array by an antenna size of the cancellation antenna array.

4. The device according to claim 2, wherein the cancellation antenna array is specifically configured to: multiply a scattering parameter matrix of the cancellation antenna array by the third transmit signal, to obtain the second cancellation signal set, wherein the scattering parameter matrix of the cancellation antenna array and a scattering parameter matrix of the transceiver antenna array are the same in their respective corresponding operating frequencies or have a multiple relationship in their respective corresponding operating frequencies; and multiply the scattering parameter matrix of the transceiver antenna array by the first transmit signal, to generate an interference signal set, wherein the interference signal set comprises an interference signal caused by the first transmit signal to each receive antenna.

5. The device according to claim 1, wherein the device further comprises a gain amplification circuit, wherein the gain amplification circuit is configured to: when an amplitude of the $i^{th}$ first cancellation signal is not equal to an amplitude of the interference signal of the $i^{th}$ receive antenna, adjust the amplitude of the $i^{th}$ first cancellation signal to be equal to the amplitude of the interference signal of the $i^{th}$ receive antenna.

6. The device according to claim 2, wherein the device further comprises a local oscillator, wherein the local oscillator is configured to provide the local oscillation signal for the up-conversion circuit.

7. A radio frequency interference cancellation method, wherein the method is applied to the device according to claims 1 to 6, and the method comprises:

receiving a radio frequency signal, and dividing the radio frequency signal into a first transmit signal and a second transmit signal, wherein the first transmit signal is sent through a corresponding transmit antenna in a transceiver antenna array, and interferes with each receive antenna in the transceiver antenna array;

performing frequency conversion processing on the second transmit signal, to obtain a first cancellation signal set, wherein the first cancellation signal set comprises n first cancellation signals, and n is a quantity of receive antennas in the transceiver antenna array; and

canceling out an interference signal of an $i^{th}$ receive antenna in the transceiver antenna array by using an $i^{th}$ first cancellation signal, to obtain an actual received signal of the $i^{th}$ receive antenna, wherein the interference signal of the $i^{th}$ receive antenna is equal in amplitude and opposite in phase to the $i^{th}$ first cancellation signal, and i is equal to 1-n.

8. The method according to claim 7, wherein the performing frequency conversion processing on the second transmit signal, to obtain a first cancellation signal comprises:

performing up-conversion on the second transmit signal by using a local oscillation signal, to obtain a third transmit signal;

obtaining a second cancellation signal set based on the third transmit signal, wherein the second cancellation signal set comprises n second cancellation signals; and

performing down-conversion on the second cancellation signals in the second cancellation signal set by using the local oscillation signal, to obtain the first cancellation signal set.

9. The method according to claim 8, wherein a cancellation antenna array obtains the second cancellation signal set based on the third transmit signal; and a frequency of the local oscillation signal is determined based on an antenna size reduction multiplier and a frequency of the second transmit signal, wherein the antenna size reduction multiplier is determined by dividing a size of the transceiver antenna array by a size of the cancellation antenna array.

10. The method according to claim 9, wherein the obtaining a second cancellation signal set based on the third transmit signal comprises:

multiplying a scattering parameter matrix of the cancellation antenna array by the third transmit signal, to obtain the second cancellation signal set, wherein the scattering parameter matrix of the cancellation antenna array and a scattering parameter matrix of the transceiver antenna array are the same in their respective corresponding operating frequencies or have a multiple relationship in their respective corresponding operating frequencies; and multiplying the scattering parameter matrix of the transceiver antenna array by the first transmit signal, to generate an interference signal set, wherein the interference signal set comprises n interference signals.

11. The method according to claim 7, wherein before the canceling out an interference signal of an $i^{th}$ receive antenna in the transceiver antenna array by using an $i^{th}$ first cancellation signal, when the amplitude of the $i^{th}$ first cancellation signal is not equal to the amplitude of the interference signal of the $i^{th}$ receive antenna, the method further comprises:

adjusting the amplitude of the $i^{th}$ first cancellation signal, so that an adjusted amplitude of the $i^{th}$ first cancellation signal is equal to the amplitude of the interference signal of the $i^{th}$ receive antenna.

12. A radio frequency interference cancellation apparatus, wherein the apparatus is applied to the device according to claims 1 to 6, and the apparatus comprises:

a receiving unit, configured to receive a radio frequency signal, and divide the radio frequency signal into a first transmit signal and a second transmit signal, wherein the first transmit signal is sent through a corresponding transmit antenna in a transceiver antenna array, and interferes with each receive antenna in the transceiver antenna array;

a processing unit, configured to perform frequency conversion processing on the second transmit signal, to obtain a first cancellation signal set, wherein the first cancellation signal set comprises n first cancellation signals, and n is a quantity of receive antennas in the transceiver antenna array; and

a cancellation unit, configured to cancel out an interference signal of an $i^{th}$ receive antenna in the transceiver antenna array by using an $i^{th}$ first cancellation signal, to obtain an actual received signal of the $i^{th}$ receive antenna, wherein the interference signal of the $i^{th}$ receive antenna is equal in amplitude and opposite in phase to the $i^{th}$ first cancellation signal, and i is equal to 1-n.

13. The apparatus according to claim 12, wherein the processing unit comprises:

an up-conversion subunit, configured to perform up-conversion on the second transmit signal by using a local oscillation signal, to obtain a third transmit signal;

an obtaining subunit, configured to obtain a second cancellation signal set based on the third transmit signal, wherein the second cancellation signal set comprises n second cancellation signals; and

a down-conversion subunit, configured to perform down-conversion on the second cancellation signals in the second cancellation signal set by using the local oscillation signal, to obtain the first cancellation signal set.

14. The apparatus according to claim 13, wherein the obtaining subunit is specifically configured to obtain the second cancellation signal set based on the third transmit signal by using a cancellation antenna array; and a frequency of the local oscillation signal is determined based on an antenna size reduction multiplier and a frequency of the second transmit signal, wherein the antenna size reduction multiplier is determined by dividing a size of the transceiver antenna array by a size of the cancellation antenna array.

15. The apparatus according to claim 14, wherein the obtaining subunit is specifically configured to: multiply a scattering parameter matrix of the cancellation antenna array by the third transmit signal, to obtain the second cancellation signal set, wherein the scattering parameter matrix of the cancellation antenna array and a scattering parameter matrix of the transceiver antenna array are the same in their respective corresponding operating frequencies or have a multiple relationship in their respective corresponding operating frequencies; and multiply the scattering parameter matrix of the transceiver antenna array by the first transmit signal, to generate an interference signal set, wherein the interference signal set comprises n interference signals.

16. The apparatus according to claim 12, wherein the apparatus further comprises:
an adjusting unit, configured to: before the cancellation unit is executed, adjust the amplitude of the $i^{th}$ first cancellation signal, so that an adjusted amplitude of the $i^{th}$ first cancellation signal is equal to the amplitude of the interference signal of the $i^{th}$ receive antenna.

17. A computer-readable storage medium, wherein the computer-readable storage medium stores a program, and when the program is read and executed by one or more processors, the radio frequency interference cancellation method according to any one of claims 7 to 11 is implemented.

18. A communications device, comprising a processor and a memory, wherein
the memory is configured to store computer-readable instructions or a computer program, and the processor is configured to read the computer-readable instructions to implement the radio frequency interference cancellation method according to any one of claims 7 to 11.

FIG. 1

201

202

203

| Power splitter circuit | Cancellation circuit | Combination circuit |

204

| Transceiver antenna array |

FIG. 2

FIG. 3

FIG. 4

300 mm

300 mm

Antenna 1  Antenna 2  Antenna 3  Antenna 4

36 mm

43.2 mm

60 mm

6 mm

FIG. 5a

FIG. 5b

FIG. 6a

FIG. 6b

FIG. 6c

FIG. 6d

```
S701

┌─────────────────────────────────────────────────────────────────────────┐
│ Receive a radio frequency signal, and divide the radio frequency signal   │
│ into a first transmit signal and a second transmit signal                 │
└─────────────────────────────────────────────────────────────────────────┘

                              S702

┌─────────────────────────────────────────────────────────────────────────┐
│ Perform frequency conversion processing on the second transmit signal,    │
│ to obtain a first cancellation signal set, where the first cancellation    │
│ signal set includes n first cancellation signals                           │
└─────────────────────────────────────────────────────────────────────────┘

                              S703

┌─────────────────────────────────────────────────────────────────────────┐
│ Cancel out an interference signal of an i^th receive antenna in a          │
│ transceiver antenna array by using an i^th first cancellation signal, to   │
│ obtain an actually received signal of the i^th receive antenna             │
└─────────────────────────────────────────────────────────────────────────┘
```

FIG. 7

UE signal

Interference signal

Transceiver antenna

TRx 1

3   Circulator

2       1

TRx 2

TRx 3

Power splitter

Combiner

Tx 1        0    Rx 1

π       Phase shifter

Variable gain amplifier

Tx 2           Rx 2

Tx 3           Rx 3

$f_0$

Circulator

Cancellation antenna

FIG. 8

FIG. 9

EP 4 024 718 A1

Interference signal

Transceiver
antenna

TRx 1    TRx 2    TRx 3

3
2    1
0
Tx 1    Rx 1    Tx 2    Rx 2    Tx 3    Rx 3

π

$f_0$

Cancellation
antenna

D/A    A/D    D/A    A/D    D/A    A/D

Baseband 1,
Control algorithm

Baseband 2,
Control algorithm

Baseband 3,
Control algorithm

FIG. 10

Interference
signal vector

Interference
signal vector

Interference
signal vector

$\phi$

Cancellation
signal vector

Cancellation
signal vector

Cancellation
signal vector

FIG. 11

FIG. 12

FIG. 13

## INTERNATIONAL SEARCH REPORT

| International application No. |
|---|
| **PCT/CN2020/110385** |

**A. CLASSIFICATION OF SUBJECT MATTER**

H04B 1/525(2015.01)i

According to International Patent Classification (IPC) or to both national classification and IPC

**B. FIELDS SEARCHED**

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

WPI, EPODOC, CNPAT, CNKI: 消除, 消减, 抵消, 干扰, 发射, 发送, 接收, 天线, decrease, interfere, eliminate, transmit, receive, antenna

**C. DOCUMENTS CONSIDERED TO BE RELEVANT**

| Category* | Citation of document, with indication, where appropriate, of the relevant passages | Relevant to claim No. |
|---|---|---|
| Y | CN 104170340 A (HUAWEI TECHNOLOGIES CO., LTD.) 26 November 2014 (2014-11-26) description, paragraphs [0099]-[0277] | 1-18, |
| Y | CN 101420246 A (HUAWEI TECHNOLOGIES CO., LTD.) 29 April 2009 (2009-04-29) description, pages 3-10 | 1-18 |
| A | CN 101031129 A (ZTE CORPORATION) 05 September 2007 (2007-09-05) entire document | 1-18 |
| A | CN 103595520 A (HUAWEI TECHNOLOGIES CO., LTD.) 19 February 2014 (2014-02-19) entire document | 1-18 |
| A | WO 0154290 A2 (DITRANS CORPORATION) 26 July 2001 (2001-07-26) entire document | 1-18, |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2020** | **24 November 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/110385** |

| Patent document cited in search report | | | Publication date (day/month/year) | Patent family member(s) | | | Publication date (day/month/year) |
| --- | --- | --- | --- | --- | --- | --- | --- |
| CN | 104170340 | A | 26 November 2014 | ES | 2712277 | T3 | 10 May 2019 |
| | | | | US | 2017019274 | A1 | 19 January 2017 |
| | | | | WO | 2015149373 | A1 | 08 October 2015 |
| | | | | EP | 3116180 | A1 | 11 January 2017 |
| CN | 101420246 | A | 29 April 2009 | WO | 2010057384 | A1 | 27 May 2010 |
| | | | | US | 2011228828 | A1 | 22 September 2011 |
| | | | | EP | 2352234 | A1 | 03 August 2011 |
| CN | 101031129 | A | 05 September 2007 | None | | | |
| CN | 103595520 | A | 19 February 2014 | EP | 2874340 | A1 | 20 May 2015 |
| | | | | WO | 2014026501 | A1 | 20 February 2014 |
| | | | | US | 2015156001 | A1 | 04 June 2015 |
| WO | 0154290 | A2 | 26 July 2001 | EP | 1249077 | A2 | 16 October 2002 |
| | | | | US | 2004151238 | A1 | 05 August 2004 |
| | | | | JP | 2003520549 | A | 02 July 2003 |
| | | | | AU | 3101101 | A | 31 July 2001 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910893571